# EUROPÄISCHE PATENTSCHRIFT

(11) **EP 3 963 691 B1**
(45) Veröffentlichungstag und Bekanntmachung des Hinweises auf die Patenterteilung: **24.07.2024**
(21) Anmeldenummer: 20724033.4
(22) Anmeldetag: 30.04.2020
(51) Int. Cl.: H02K 1/30, H02K 15/02

(54) **ANTRIEBSMOTOR MIT EINER ISOLATIONSHÜLSE**
DRIVE MOTOR WITH AN INSULATING HOUSING
MOTEUR D'ENTRAÎNEMENT DOTÉ D'UN MANCHON ISOLANT

(30) Priorität: 02.05.2019 DE 102019111334
(43) Veröffentlichungstag der Anmeldung: 09.03.2022
(73) Patentinhaber: Festool GmbH, 73240 Wendlingen (DE)
(72) Erfinder: BARTH, Volker, 73773 Aichwald (DE); GOOS, Florian, 73230 Kirchheim/Teck (DE)
(74) Vertreter: Patentanwälte Bregenzer und Reule Partnerschaftsgesellschaft mbB
(86) Internationale Anmeldenummer: PCT/EP2020/062055
(87) Internationale Veröffentlichungsnummer: WO 2020/221869

(56) Entgegenhaltungen:
- EP-A1- 3 415 066
- US-A- 2 305 125
- US-A- 3 766 416
- US-A- 5 907 208
- US-A1- 2017 373 548

## Beschreibung

Die Erfindung betrifft einen Antriebsmotor für ein Sauggerät oder eine Werkzeugmaschine in Gestalt einer Hand-Werkzeugmaschine oder einer halbstationären Werkzeugmaschine, gemäß dem Oberbegriff des Anspruchs 1.

Ein derartiger Antriebsmotor ist z.B. in US 5,907,208 erläutert.

Zur Isolation eines Blechpakets von einer Motorwelle ist es üblich, die beiden Körper mit einer Isolationsmasse zu umspritzen, was beispielsweise aus DE 1 538 885 A1 hervorgeht. Allerdings ist die Herstellung aufwendig.

Es ist daher die Aufgabe der vorliegenden Erfindung, einen verbesserten Antriebsmotor bereitzustellen.

Zur Lösung dieser Aufgabe ist ein Antriebsmotor für ein Sauggerät oder eine Werkzeugmaschine in Gestalt einer Hand-Werkzeugmaschine oder einer halbstationären Werkzeugmaschine gemäß der technischen Lehre des Anspruchs 1 vorgesehen.

Die Steckachse entspricht vorzugsweise der Drehachse des Antriebsmotors und/oder einer Längsachse der Motorwelle und/oder der Isolationshülse. Die Steckachse, entlang derer die Motorwelle in die Steckaufnahme eingesteckt ist, entspricht vorzugsweise der Steckachse, entlang derer die Isolationshülse in die Wellendurchtrittsöffnung des Blechpakets eingesteckt ist oder verläuft parallel zu derselben.

Es ist dabei ein Grundgedanke, dass die Montage oder Herstellung des Antriebsmotors vereinfacht ist. Die Isolationshülse bildet einen einfachen Steckkörper, der in die Wellendurchtrittsöffnung des Blechpakets eingesteckt wird und seinerseits wiederum eine Steckaufnahme zum Einstecken oder Durchstecken der Motorwelle bereitstellt. Vorteilhaft ist es, wenn zunächst die Isolationshülse in die Wellendurchtrittsöffnung eingesteckt wird, bevor Motorwelle in die Steckaufnahme der Isolationshülse eingesteckt wird. Es ist aber grundsätzlich auch denkbar, dass zunächst die Motorwelle in die Steckaufnahme der Isolationshülse eingesteckt wird und dann die an der Motorwelle angeordnete Isolationshülse in die Wellendurchtrittsöffnung eingesteckt wird.

Die Isolationshülse erstreckt sich vorzugsweise über eine vollständige Länge des Blechpakets bezüglich der Steckachse. Mithin ist also ein Halteabschnitt der Motorwelle, an dem das Blechpaket gehalten ist, vollständig anhand der Isolationshülse elektrisch von dem Blechpaket isoliert.

Es ist auch möglich, dass das Blechpaket ausschließlich anhand der Isolationshülse elektrisch von der Motorwelle isoliert ist. Zudem ist es aber möglich, dass weitere Isolationsmaßnahmen getroffen sind, d.h. dass beispielsweise die Motorwelle selbst noch eine Isolationsschicht aufweist, die im montierten Zustand des Antriebsmotors zwischen der Isolationshülse und der Motorwelle angeordnet ist. Des Weiteren ist es denkbar, dass zwar die Isolationshülse in die Wellendurchtrittsöffnung des Blechpakets eingesteckt ist, zusätzlich aber noch beispielsweise mit Kunststoffmaterial vergossen wird. Dadurch wird eine zusätzliche Isolation bereitgestellt.

Die Motorwelle steht vorzugsweise vor die Einstecköffnung der Isolationshülse und/oder vor die Austrittsöffnung der Steckaufnahme vor, die an einem zu den Einstecköffnungen entgegengesetzten Längsendbereich der Isolationshülse vorgesehen ist. Beispielsweise kann also die Motorwelle beidseits vor die Isolationshülse vorstehen, um dort beispielsweise anhand der Lageranordnung, insbesondere anhand von Kugellagern, Rollenlagern oder dergleichen anderen Wälzlagern, bezüglich des Stators drehbar gelagert zu sein. An dieser Stelle sei aber erwähnt, dass sich die Isolationshülse auch bis beispielsweise zu einem der Lager erstrecken kann, d.h. dass beispielsweise zwischen einer Lageraufnahme des Lagers und der Motorwelle die Isolationshülse sandwichartig eine elektrische Isolation bereitstellen kann.

Die Isolationshülse weist zweckmäßigerweise mindestens einen Längsanschlag zum Anschlagen an dem Blechpaket bezüglich der Steckachse auf. Der Längsanschlag kann beispielsweise einen radialen Vorsprung umfassen, der radial bezüglich der Drehachse oder Steckachse vor einen Rohrabschnitt der Isolationshülse vorsteht.

Die Isolationshülse hat zweckmäßigerweise einen vor einen Rohrabschnitt der Isolationshülse vorstehenden Flanschkörper zum Abstützen an dem Blechpaket bezüglich der Steckachse. Der Rohrabschnitt ist beispielsweise ganz oder im Wesentlichen in der Wellendurchtrittsöffnung aufgenommen. Der Flanschkörper kann ein Ringflanschkörper sein, d.h. dass er sich ringförmig um die Drehachse oder Steckachse erstreckt. Es ist aber auch möglich, dass der Flanschkörper ein Teilringkörper ist, d.h. nicht vollständig ringförmig ist.

Die Isolationshülse ist zweckmäßigerweise zwischen dem Blechpaket und der Motorwelle in einer oder mehreren Kraftrichtungen verspannt, beispielsweise einer Kraftrichtung radial zu der Drehachse und/oder einer Kraftrichtung parallel zur Drehachse. Beispielsweise ist vorgesehen, dass die Isolationshülse durch die Motorwelle nach radial außen bezüglich der Drehachse mit dem Blechpaket verspannt ist. Die in die Steckaufnahme eingesteckte oder durchgesteckte Motorwelle sorgt also für eine Verspannung der Isolationshülse zwischen der Motorwelle und der Wellendurchtrittsöffnung bzw. dem Blechpaket.

Von dem Blechpaket steht erfindungsgemäß mindestens ein Widerlagervorsprung in die Wellendurchtrittsöffnung vor, welcher in die Isolationshülse eindringt. Dabei ist es möglich, dass der mindestens eine Widerlagervorsprung dann in die Isolationshülse bzw. deren Außenwand eindringt, wenn diese durch die Motorwelle mit der Wellendurchtrittsöffnung verspannt ist und/oder durch die Motorwelle in die Wellendurchtrittsöffnung hinein verdrängt ist. Es ist also möglich, dass der mindestens eine Widerlagervorsprung nicht in einen Steckquerschnitt der Wellendurchtrittsöffnung vorsteht, der zum Einstecken der Isolationshülse in die Wellendurchtrittsöffnung vorgesehen ist, wenn in der Isolationshülse keine Motorwelle angeordnet ist. Die in die Steckaufnahme der Isolationshülse eingesteckte Motorwelle verdrängt jedoch den radialen Außenumfang der Isolationshülse in Richtung des mindestens einen Widerlagervorsprungs, so dass sich dieser mit der Isolationshülse in formschlüssigen Eingriff gelangt und/oder sich mit der Isolationshülse sozusagen verkrallt oder verspannt. Insbesondere vorteilhaft ist es, wenn der mindestens eine Widerlagervorsprung eine Außenoberfläche der Isolationshülse plastisch verformt, wenn die Isolationshülse in der Wellendurchtrittsöffnung aufgenommen ist und/oder durch die Motorwelle in Richtung der Wellendurchtrittsöffnung verdrängt ist. Der mindestens eine Widerlagervorsprung bildet beispielsweise eine Haltekralle zum krallenartigen Eindringen in die Isolationshülse.

Bevorzugt ist es, wenn mehrere Widerlagervorsprünge vorgesehen sind, die in Bezug auf die Steckachse oder Drehachse Winkelabstände und/oder Längsabstände zueinander aufweisen. Insbesondere ist es vorteilhaft, wenn an einander gegenüberliegenden Seiten der Wellendurchtrittsöffnung jeweils mindestens ein Widerlagervorsprung vorgesehen ist.

In Bezug auf die Steckachse oder Drehachse ist es vorteilhaft, wenn mehrere, zueinander beabstandete Widerlagervorsprünge oder Gruppen von Widerlagervorsprüngen vorhanden sind, so dass diese in einem Längsabstand bezüglich der Steckachse oder Drehachse in die Isolationshülse eindringen können.

An der Isolationshülse ist vorzugsweise mindestens eine Formschlusspartie ausgebildet, an der die Isolationshülse durch die in die Steckaufnahme eingesteckte Motorwelle bezüglich der Drehachse nach radial außen in einen formschlüssigen Eingriff mit dem Blechpaket verdrängt ist. Diese Formschlusspartie kann beispielsweise eine oder mehrere solche Partien umfassen, die zwischen zwei der vorgenannten Widerlagervorsprünge eindringen oder dazwischen aufgenommen sind und/oder die in eine Formschlussaufnahme des Blechpakets eindringen. Die mindestens eine Formschlusspartie der Isolationshülse kann auch eine Formschlussaufnahme umfassen, in die ein Widerlagervorsprung des Blechpakets eingreift.

Bevorzugt ist es, wenn die mindestens eine Formschlusspartie eine Stufe umfasst, an der eine Stirnseite des Blechpakets abgestützt ist. Bevorzugt ist die Stufe ringförmig oder flanschartig. Die Steckaufnahme weist beispielsweise unmittelbar neben dem Blechpaket vor dem Einstecken der Motorwelle einen Innenquerschnitt auf, der durch das Einstecken der Motorwelle vergrößert oder aufgeweitet ist, so dass sich die Formschlusspartie oder die Stufe ausbildet.

Vorteilhaft ist es ferner, wenn die Isolationshülse und die Motorwelle anhand von Formschlusskonturen in Eingriff miteinander sind, z.B. parallel und/oder verdrehsicher bezüglich der Steckachse und/oder einer Längsachse der Motorwelle oder der Isolationshülse. Formschlusskonturen, beispielsweise Riffelungen, Nuten, wabenartige Strukturen oder dergleichen andere Formschlusskonturierungen, können dabei beispielsweise am Innenumfang der Isolationshülse und/oder am Außenumfang der Motorwelle vorgesehen sein, insbesondere an demjenigen Bereich, mit dem die Motorwelle im montierten Zustand in der Isolationshülse aufgenommen ist. Beispielsweise können eine oder mehrere Längsnuten und/oder Längsvorsprünge am radialen Außenumfang der Motorwelle vorteilhaft sein.

Vorteilhaft ist vorgesehen, dass die Isolationshülse beim Einstecken der Isolationshülse in die Wellendurchtrittsöffnung und/oder beim Einstecken der Motorwelle in die Isolationshülse entlang der Steckachse plastisch derart verformt wird, dass die Motorwelle in der Isolationshülse und/oder die Isolationshülse in der Wellendurchtrittsöffnung des Blechpakets formschlüssig gehalten ist, insbesondere verdrehsicher bezüglich der Steckachse und/oder verschiebefest bezüglich der Steckachse.

Die Steckaufnahme weist zweckmäßigerweise einen ersten Innenquerschnitt auf, der einem der Einstecköffnung zugewandten Längsendbereich des Blechpakets zugeordnet ist. Weiterhin weist die Steckaufnahme einen zweiten Innenquerschnitt auf, der einem von der Einstecköffnung abgewandten Längsendbereich des Blechpakets zugeordnet ist. Abschnitte der Isolationshülse, an der diese den ersten und zweiten Innenquerschnitt aufweisen, kommen also an den jeweiligen Längsendbereichen am Blechpaket montierten Zustand der Isolationshülse an dem Blechpaket zu liegen. Im vollständig in der Steckaufnahme eingesteckten Zustand der Motorwelle liegt ein Abschnitt der Motorwelle mit einem ersten Außenquerschnitt an der Steckaufnahme im Bereich des ersten Innenquerschnitts und ein Abschnitt der Motorwelle mit einem zweiten Außenquerschnitt an der Steckaufnahme im Bereich des zweiten Innenquerschnitts an. Zu einer Verspannung der Isolationshülse, insbesondere einer radialen Verspannung der Isolationshülse, bezüglich der Wellendurchtrittsöffnung sind die beiden nachfolgenden Maßnahmen einzeln oder in Kombination vorteilhaft. Der erste Innenquerschnitt der Steckaufnahme ist vorteilhaft größer als der zweite Innenquerschnitt. Eine Verspannung erreicht man auch dann, wenn vorteilhaft vorgesehen ist, dass der erste und zweite Außenquerschnitt der Motorwelle identisch sind oder sogar wenn der erste Außenquerschnitt der Motorwelle größer als der zweite Außenquerschnitt ist, wenn jedoch die Differenz zwischen dem ersten Außenquerschnitt und dem zweiten Außenquerschnitt kleiner als die Differenz zwischen dem ersten Innenquerschnitt und dem zweiten Innenquerschnitt der Steckaufnahme ist.

Vorteilhaft ist ferner, wenn der erste Außenquerschnitt der Motorwelle kleiner als der zweite Außenquerschnitt ist. Dabei ist es möglich, dass die Steckaufnahme gleiche erste und zweite Innenquerschnitte aufweist oder sogar dass der erste Innenquerschnitt kleiner als der zweite Innenquerschnitt ist, wenn die Differenz zwischen diesen beiden Innenquerschnitten kleiner als die Differenz zwischen den Außenquerschnitten der Motorwelle ist.

Mithin ist es also vorteilhaft, wenn der erste Innenquerschnitt und der erste Außenquerschnitt und weiterhin der zweite Innenquerschnitt und der zweite Außenquerschnitt zueinander komplementär und/oder zueinander passend sind. Die Innen- und Außenquerschnitte können dabei beispielsweise rund sein, insbesondere kreisrund. Es ist aber auch möglich, dass die zueinander passenden oder komplementären Querschnitte oder Konturen der Steckaufnahme bzw. Außenkonturen der Motorwelle, nicht rund sind, beispielsweise polygonal oder dergleichen andere Konturen aufweisen, um eine Verdrehsicherung zwischen der Steckaufnahme bzw. Isolationshülse und der Motorwelle zu realisieren.

Weiterhin vorteilhaft ist es, wenn der zweite Innenquerschnitt der Steckaufnahme durch den in ihn eingesteckten zweiten Außenquerschnitt der Motorwelle vergrößert oder aufgeweitet ist. Selbstverständlich kann auch der erste Innenquerschnitt durch den ersten Außenquerschnitt der Motorwelle vergrößert oder aufgeweitet sein.

Zwar ist es möglich, dass zwischen den voneinander verschiedenen Innenquerschnitten oder Außenquerschnitten eine oder mehrere Stufen vorhanden sind. Weiterhin ist es möglich, dass die Innenquerschnitte bzw. Außenquerschnitte in der Art von Ringbünden oder ringförmigen Anlageflächen ausgestaltet sind. Bevorzugt ist es jedoch, wenn der Innenquerschnitt der Steckaufnahme von dem ersten Innenquerschnitt zu dem zweiten Innenquerschnitt kontinuierlich, insbesondere konisch oder in der Art eines Steckkonusses, kontinuierlich abnimmt. Eine derartige Bauform ermöglicht auch beispielsweise eine einfache Entformung der Isolationshülse, wenn diese als Gussteil hergestellt ist. Weiterhin vorteilhaft ist es, wenn der Außenquerschnitt der Motorwelle von dem ersten Außenquerschnitt zu dem zweiten Außenquerschnitt kontinuierlich zunimmt. Auch hier wäre alternativ eine Stufe oder dergleichen andere nicht kontinuierliche Kontur möglich.

Bevorzugt ist es, wenn die Wellendurchtrittsöffnung über ihre gesamte Länge bezüglich der Steckachse bzw. Drehachse des Rotors denselben Innenquerschnitt aufweist. Dann können beispielsweise gleiche oder identische Bleche zur Bildung des Blechpakets verwendet werden. An dieser Stelle sei auch erwähnt, dass die Bleche sich funktional voneinander unterscheiden können, beispielsweise um die bereits erwähnten Widerlagervorsprünge bereitzustellen. Es ist aber auch möglich, dass insbesondere zur Erleichterung des Einsteckens der Isolationshülse in die Wellendurchtrittsöffnung Maßnahmen getroffen sind. Vorteilhaft ist es z.B., wenn die Wellendurchtrittsöffnung des Blechpakets an einem zum Einstecken der Isolationshülse vorgesehenen Längsendbereich einen größeren Innenquerschnitt aufweist als an einem zu diesem Längsendbereich entgegengesetzten Längsendbereich.

Vorteilhaft ist es, wenn Verdrehsicherungskonturen vorgesehen sind, anhand deren die Isolationshülse und das Blechpaket verdrehsicher bezüglich der Drehachse in Eingriff miteinander sind. Die Verdrehsicherungskonturen können beispielsweise zueinander komplementäre Vorsprünge und Aufnahmen, insbesondere Längsnuten und Längsvorsprünge oder Rippen, umfassen. Beispielsweise ist am Blechpaket eine Längsnut oder eine Verdrehsicherungsaufnahme vorgesehen, während an der Isolationshülse ein Verdrehsicherungsvorsprung, beispielsweise ein Längsvorsprung oder eine Längsrippe, vorhanden ist. Der Verdrehsicherungsvorsprung steht beispielsweise radial bezüglich der Steckachse und/oder der Drehachse und/oder der Längsachse der Isolationshülse vor deren beispielsweise zylindrischen oder kreisrunden Außenumfang vor. Die Verdrehsicherungsaufnahme hingegen ist beispielsweise als eine sich radial in den Innenumfang der Wellendurchtrittsöffnung hinein erstreckende Verdrehsicherungsaufnahme oder Vertiefung ausgestaltet. Ohne weiteres ist es aber auch möglich, dass beispielsweise vor den Innenumfang der Wellendurchtrittsöffnung mindestens ein Verdrehsicherungsvorsprung, zum Beispiel eine Längsrippe oder ein Längsvorsprung, nach radial innen zum formschlüssigen Eingriff in eine Verdrehsicherungsaufnahme oder -vertiefung, beispielsweise eine Längsnut, der Isolationshülse vorsteht. Mithin können also die mindestens eine Verdrehsicherungsaufnahme am Blechpaket und der mindestens eine Verdrehsicherungsvorsprung an der Isolationshülse vorgesehen sein und/oder umgekehrt der mindestens eine Verdrehsicherungsvorsprung an dem Blechpaket und die mindestens eine Verdrehsicherungsaufnahme an der Isolationshülse.

Der Verdrehsicherungsvorsprung und/oder die Verdrehsicherungsaufnahme können sich über die gesamte Längslänge der Wellenaufnahme und/oder der in die Wellenaufnahme im montierten Zustand eingesteckten Partie der Isolationshülse erstrecken. Es ist aber auch möglich, dass der Verdrehsicherungsvorsprung und/oder die Verdrehsicherungsaufnahme sich nur über einen Teil der Länge der Wellenaufnahme oder dieser Partie der Isolationshülse erstrecken.

In Bezug auf die Steckachse können in Winkelabständen mehrere Paarungen von Verdrehsicherungsvorsprung und Verdrehsicherungsaufnahmen an der Isolationshülse und der Wellenaufnahme vorgesehen sein, beispielsweise an einander entgegengesetzten Seiten oder dergleichen. Bevorzugt ist es, wenn eine einzige Paarung von Verdrehsicherungsvorsprung und Verdrehsicherungsaufnahme an der Isolationshülse bzw. der Wellenaufnahme oder dem Blechpaket vorgesehen sind.

Die Isolationshülse kann sich ausschließlich innerhalb des Blechpakets erstrecken. Bevorzugt ist jedoch, wenn die Isolationshülse an einer oder beiden Stirnseiten des Blechpakets vor das Blechpaket vorsteht und dort einen Isolationsabschnitt aufweist. Der Isolationsabschnitt kann einen zusätzlichen Isolationsabstand von mindestens 5 mm, vorzugsweise mindestens 7 mm, sogar mindestens 8 mm zwischen dem Blechpaket und der Motorwelle bereitstellen. Der Isolationsabstand entspricht beispielsweise einem Luftabstand zwischen einerseits der Motorwelle und andererseits dem Blechpaket.

Der Isolationsabschnitt umfasst vorzugsweise einen Rohrabschnitt oder wird durch einen Rohrabschnitt gebildet, der nicht nach radial außen bezüglich der Drehachse vor einen in der Wellendurchtrittsöffnung des Blechpakets aufgenommenen Abschnitt der Isolationshülse, beispielsweise ebenfalls einem Rohrabschnitt, vorsteht, wobei dieser Abschnitt bezüglich der Steckachse neben, insbesondere unmittelbar neben, dem Isolationsabschnitt angeordnet ist. Mithin kann also der Isolationsabschnitt rohrförmig sein. Ein derartiger Isolationsabschnitt eignet sich zum Durchstecken durch die Wellendurchtrittsöffnung des Blechpakets.

Weiterhin ist es aber auch möglich, dass der Isolationsabschnitt einen Flanschkörper, insbesondere einen ringförmigen oder teilringförmigen Flanschkörper, umfasst, der nach radial außen vor einen in dem Blechpaket aufgenommenen Rohrabschnitt der Isolationshülse bezüglich der Drehachse vorsteht. Der Flanschkörper kann gleichzeitig einen Stützanschlag oder Längsanschlag bilden, mit dem die Isolationshülse an der Stirnseite des Blechpakets anschlägt.

Die Isolationshülse ist zweckmäßigerweise in einem Zustand unterhalb einer Betriebstemperatur des Antriebsmotors in die Wellendurchtrittsöffnung eingesteckt. Bevorzugt ist beispielsweise eine Temperatur von weniger als 40° C. Die Betriebstemperatur des Antriebsmotors beträgt beispielsweise zwischen 90° C und 120° C, insbesondere etwa maximal 100° C. Mithin ist also die Isolationshülse im sozusagen kalten Zustand in die Wellendurchtrittsöffnung eingesteckt. Dadurch wird verhindert, dass die Isolationshülse beim Betrieb des Antriebsmotors sozusagen zu fließen beginnt.

Die Isolationshülse besteht vorzugsweise aus Kunststoff, insbesondere aus einem glasfaserverstärktem Kunststoff. Als Kunststoff eignet sich insbesondere Polyamid. Bevorzugt ist ein Polyamid aus PA6 und PA66. Eine Glasfaserverstärkung beträgt beispielsweise 20 % bis 30 % des Polyamid-Materials, kann aber auch bis zu 50 % des Polyamid-Materials betragen. Die Isolationshülse behält ihre feste Struktur vorzugsweise bis zu einer Temperatur von mindestens 120° C, vorzugsweise mindestens 130 °C, mindestens 140 °C oder sogar mindestens 155 °C bei, d.h. sie wird erst bei weiterer Erhitzung weich.

Vorteilhaft eignet sich eine derartige Isolationshülse auch für ein System umfassend einen ersten Antriebsmotor und einen zweiten Antriebsmotor, wobei die Antriebsmotoren jeweils einen Stator mit einer Erregerspulenanordnung und einen Rotor mit einer Motorwelle aufweisen, die an dem Stator oder bezüglich des Stators anhand einer Lageranordnung um eine Drehachse drehbar gelagert ist und eine Wellendurchtrittsöffnung eines Blechpakets durchsetzt, das an einem Halteabschnitt der jeweiligen Motorwelle gehalten ist.

Das System ist beispielsweise in der Art eines Motorbaukastens ausgestaltet.

Die Antriebsmotoren sind z.B. für ein Sauggerät oder eine Werkzeugmaschine in Gestalt einer Hand-Werkzeugmaschine oder einer halbstationären Werkzeugmaschine vorgesehen oder bilden Bestandteile des Sauggeräts oder der Werkzeugmaschine.

Ein jeweiliger oder jeder Antriebsmotor ist z.B. für ein Sauggerät oder eine Werkzeugmaschine in Gestalt einer Hand-Werkzeugmaschine oder einer halbstationären Werkzeugmaschine vorgesehen oder bildet einen Bestandteil des Sauggeräts oder der Werkzeugmaschine bildet, also der Hand-Werkzeugmaschine oder der halbstationären Werkzeugmaschine.

Der erste Antriebsmotor ist beispielsweise in einem ersten Gerät angeordnet oder zur Anordnung in einem ersten Gerät vorgesehen, während der zweite Antriebsmotor in einem zweiten Gerät angeordnet oder zur Anordnung in einem zweiten Gerät vorgesehen ist, wobei das erste und das zweite Gerät voneinander verschieden sind. Das erste Gerät oder das zweite Gerät ist beispielsweise eine Hand-Werkzeugmaschine oder eine halbstationäre Werkzeugmaschine oder ein Sauggerät. Mithin sind also beispielsweise der erste Antriebsmotor für eine erste Hand-Werkzeugmaschine und der zweite Antriebsmotor für eine zweite Hand-Werkzeugmaschine oder ein Sauggerät vorgesehen.

Prinzipiell möglich ist es aber, dass beide Antriebsmotoren oder mindestens zwei Antriebsmotoren gemäß der Erfindung auch in ein und derselben Werkzeugmaschine oder demselben Sauggerät eingesetzt sind.

Bei dem System kann vorgesehen sein, dass die Halteabschnitte der Motorwellen der Antriebsmotoren im Bereich der Blechpakete identische Außenumfangsgeometrien aufweisen, wobei das Blechpaket des ersten Antriebsmotors unmittelbar am Außenumfang des Halteabschnitts der das Blechpaket tragenden Motorwelle abgestützt ist und das Blechpaket des zweiten Antriebsmotors über einen elektrisch isolierenden Isolationskörper am Halteabschnitt der das Blechpaket tragenden Motorwelle abgestützt ist und der Isolationskörper durch die Isolationshülse gebildet ist.

Es ist dabei ein Grundgedanke, dass gleiche Motorwellen für unterschiedliche Arten von Antriebsmotoren verwendbar sind. Um die Anpassung an unterschiedliche Spannungsbereiche bereitzustellen, ist beim einen Antriebsmotor keine Isolation zwischen Motorwelle und Blechpaket notwendig, beim anderen Antriebsmotor jedoch anhand des Isolationskörpers realisiert. Somit können beispielsweise auch grundsätzlich identische mechanische Strukturen bei dem jeweiligen Stator des Antriebsmotors vorgesehen sein, gleiche Lager für die Antriebsmotoren und dergleichen mehr. Mithin kann also eine Art Baukastenprinzip realisiert werden.

Eine Längenskalierung der Antriebsmotoren bezüglich der Drehachse oder in Richtung der Drehachse ist ohne weiteres möglich. Längere oder kürzere Antriebsmotoren bezüglich der Drehachse können beispielsweise unterschiedlich hohe Leistungen aufweisen.

Beispielsweise können die Blechpakete des Stators oder des Rotors oder beiden unterschiedlich lang sein. Vorzugsweise können unterschiedlich viele Bleche zu Blechpaketen geschichtet sein.

Des weiteren können Statoren mit unterschiedlichen Längen dadurch hergestellt sein, dass an einer oder beiden Stirnseiten unterschiedlich lange Abschnitte eines oder des Trägerkörpers vorgesehen sind, der das Blechpaket trägt oder ummantelt.

Auch die Isolationshülse kann unterschiedliche Längen bei an sich gleichen Geometrien aufweisen. Beispielsweise ist ein den Halteabschnitt der jeweiligen Motorwelle aufnehmender Abschnitt der Isolationshülse jeweils passend zur Länge des Halteabschnitts ausgestaltet. Neben diesem den Halteabschnitt der Motorwelle aufnehmenden Abschnitt können bei unterschiedlichen Isolationshülse gleiche Geometrien vorhanden sein, beispielsweise geometrisch gleich ausgestaltet Einstecköffnungen oder dergleichen.

Eine am Rotor angeordnete Magnetanordnung umfasst Magnete, insbesondere Permanentmagnete.

Beispielsweise bestehen magnetisierte oder zur Magnetisierung am Blechpaket des Rotors geeignete Magnetkörper der Magnete aus Aluminium-Nickel-Cobalt, Bismanol, also einer Legierung aus Bismut, Mangan und Eisen, aus einem Ferrit, z.B. einem hartmagnetischen Ferrit, z.B. auf Basis von Barium, Strontium, aus Neodym-Eisen-Bor (NdFeB), vorteilhaft mit einem Zusatz von Dysprosium, aus Samarium-Cobalt (SmCo), vorteilhaft mit 20-25 % Eisenanteil, z.B. SmCos, Sm₂Co₁₇, Sm(Co,Cu,Fe,Zr)_{z}, oder dergleichen. Auch Seltenerdmagnete oder Kunststoffmagnete sind möglich. Ferner eignen sich AlNiCo-Legierungen, PtCo-Legierungen, CuNiFe und CuNiCo-Legierungen, FeCoCr-Legierungen, martensitische Stähle oder MnAlC-Legierungen für die Magnetkörper.

Bei dem Antriebsmotor handelt es sich vorzugsweise um einen bürstenlosen Motor oder elektronisch kommutierten Motor. Insbesondere ist es vorteilhaft, wenn der jeweilige Stator des Antriebsmotors Permanentmagnete aufweist oder durch Permanentmagnete erregt ist.

Blechpakete des Rotors und/oder des Stators sind vorzugsweise aus geschichteten Elektroblechen oder Trafoblechen hergestellt.

Ein Stator des Antriebsmotors umfasst zweckmäßigerweise einen Trägerkörper aus Kunststoff, insbesondere aus Polyamid. Der Trägerkörper ist beispielsweise durch Vergießen und/oder Umspritzen des Blechpakets des Stators hergestellt. Es ist auch möglich, dass der Trägerkörper einen oder mehrere Steckkörper oder Steck-Trägerkörper umfasst, die an das Blechpaket angesteckt sind. Beispielsweise kann an eine oder beide Stirnseiten des Blechpakets ein derartiger Steck-Trägerkörper angesteckt sein. Der Trägerkörper deckt das Blechpaket vorzugsweise im Bereich der Rotoraufnahme und/oder im Bereich einer oder beider Stirnseiten des Blechpakets ab. An dem Trägerkörper sind vorzugsweise Stützen, Stützvorsprünge, Wickelköpfe und dergleichen zur Aufnahme von Spulenleitern der Erregerspulenanordnung vorgesehen. Weiterhin weist der Trägerkörper vorzugsweise elektrische Anschlusskontakte oder Anschlusseinrichtungen zum Anschließen einer Anschlussleitung auf, mit der der Antriebsmotor mit einer Bestromungseinrichtung verbindbar oder verbunden ist.

Nachfolgend werden Ausführungsbeispiele der Erfindung anhand der Zeichnung erläutert. Es zeigen:
- Figur 1: eine perspektivische Schrägdarstellung eines Systems zweier elektrischer Antriebsmotoren und Hand-Werkzeugmaschinen, die diese Antriebsmotoren aufweisen,

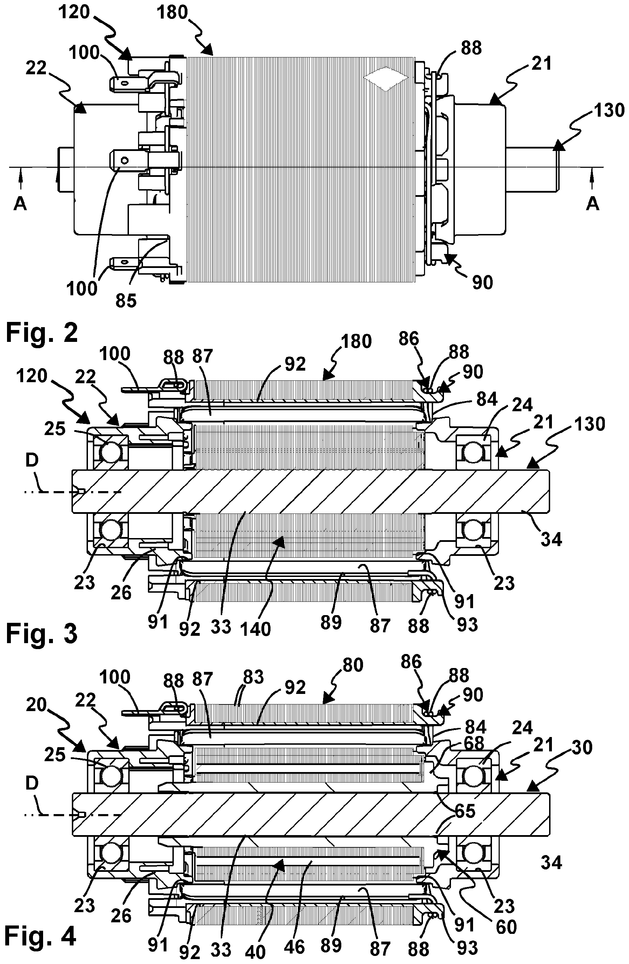

- Figur 2: eine Seitenansicht des einen Antriebsmotors des Systems gemäß Figur 1, von dem in
- Figur 3: ein Schnitt entlang einer Schnittlinie A-A in Figur 2 dargestellt ist,
- Figur 4: einen Schnitt durch den anderen Antriebsmotor des Systems gemäß Figur 1, etwa entlang derselben Schnittlinie A-A entsprechend Figur 2,
- Figur 5: eine Isolationshülse des Antriebsmotors gemäß Figur 4 in perspektivischer Darstellung,
- Figur 6: eine perspektivische Darstellung eines Rotors des Antriebsmotors gemäß Figur 4,
- Figur 7: eine Schnittdarstellung durch den Rotor gemäß Figur 6 bei dessen Herstellung, etwa entlang einer Schnittlinie B-B in Figur 6,
- Figur 8: die Ansicht etwa entsprechend Figur 7, wobei jedoch die Motorwelle vollständig in das Rotor-Blechpaket eingesteckt ist,
- Figur 9: ein Detail D1 aus Figur 8,
- Figur 10: eine perspektivische Schrägansicht auf den Stator gemäß Figur 1, etwa entsprechend einem Ausschnitt D2 in Figur 1,
- Figur 11: einen Schnitt entlang einer Schnittlinie C-C durch den Stator gemäß Figur 10 zur Veranschaulichung einer Anschlusseinrichtung, die in
- Figur 12: seitlich in offenem Zustand und
- Figur 13: seitlich in geschlossenem Zustand dargestellt ist,
- Figur 14: eine perspektivische Darstellung der Anschlusseinrichtung gemäß Figur 12 und
- Figur 15: eine perspektivische Darstellung der Anschlusseinrichtung gemäß Figur 13,
- Figur 16: eine perspektivische Schrägdarstellung zur Veranschaulichung einer Montage und Bearbeitung der Anschlusseinrichtung gemäß der Figuren 10 bis 14 in perspektivischer Schrägdarstellung, etwa entsprechend Figur 10 mit einer Schweißzange,
- Figur 17: einen Schnitt durch die Anordnung gemäß Figur 16 etwa entlang einer Schnittlinie D-D,
- Figur 18: die Abbildung gemäß Figur 17, jedoch mit zueinander bewegten Schweißzangenarmen,
- Figur 19: einen Ausschnitt D3 des Stators gemäß Figur 1 mit einer Nutabdeckung, die in
- Figur 20: perspektivisch schräg dargestellt ist,
- Figur 21: ein Detail D4 aus Figur 19 während einer Montage der Nutabdeckung gemäß Figur 17 in eine Statornut,
- Figur 22: das Detail D4, jedoch mit weiter in die Statornut verstellter Nutabdeckung und
- Figur 23: das Detail D4 mit fertig montierter Nutabdeckung,
- Figur 23B: alternative Ausführungsformen einer Nutabdeckung und einer Nut, etwa entsprechend der Ansicht gemäß Figur 23,

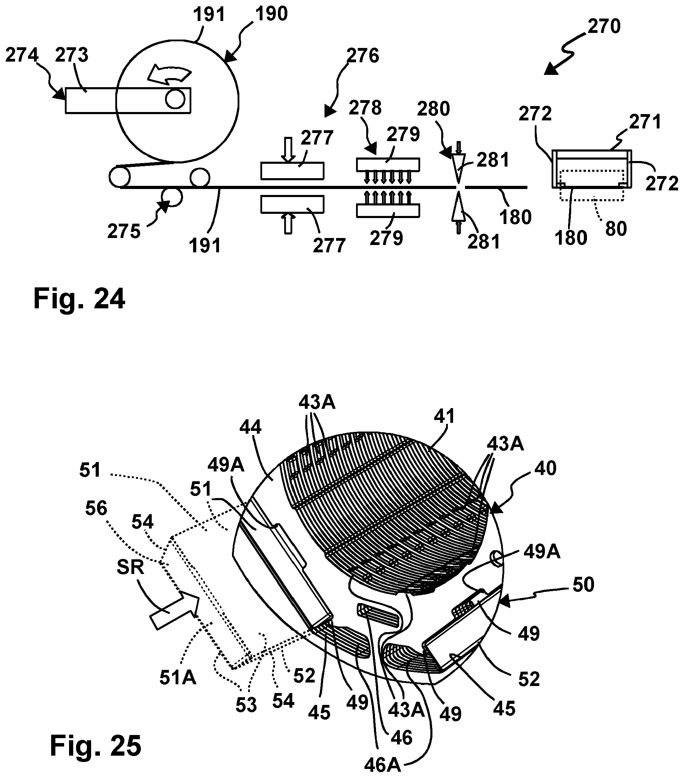

- Figur 24: eine schematische Darstellung einer Montagevorrichtung zur Herstellung der Nutabdeckung gemäß Figur 19 und deren Montage am Stator gemäß Figuren 21 bis 23,
- Figur 25: eine perspektivische Schrägansicht auf einen Ausschnitt eines Rotors der vorgenannten Motoren, etwa entsprechend einem Ausschnitt D5 in Figur 6 und

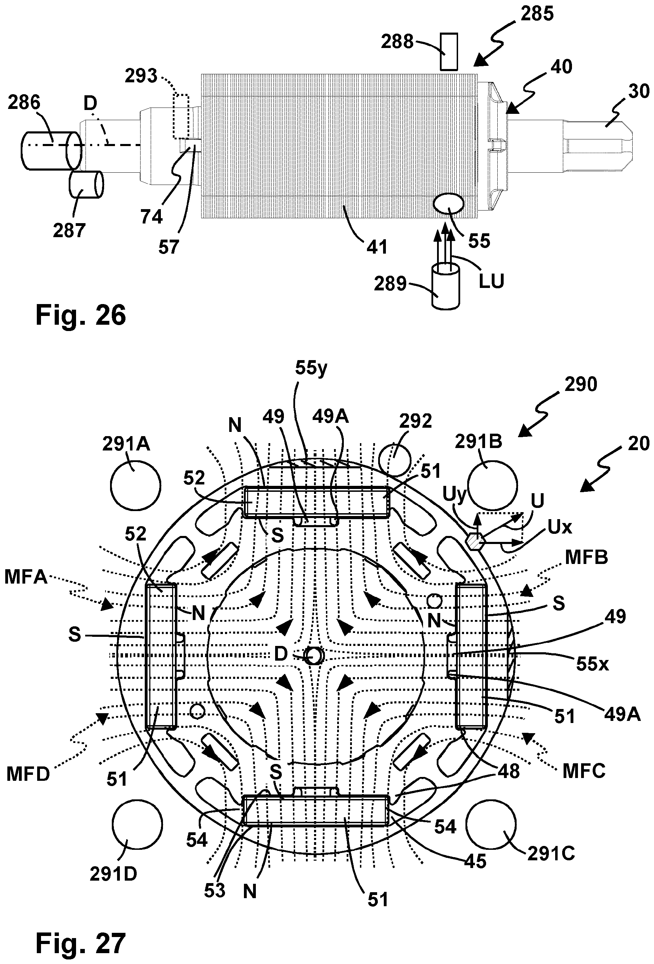

- Figur 26: eine schematische Darstellung einer Wuchteinrichtung zum Wuchten des Rotors gemäß vorstehender Figur, und
- Figur 27: eine schematische Frontalansicht auf den Rotor gemäß vorstehender Figur mit einer Magnetisierungsvorrichtung.

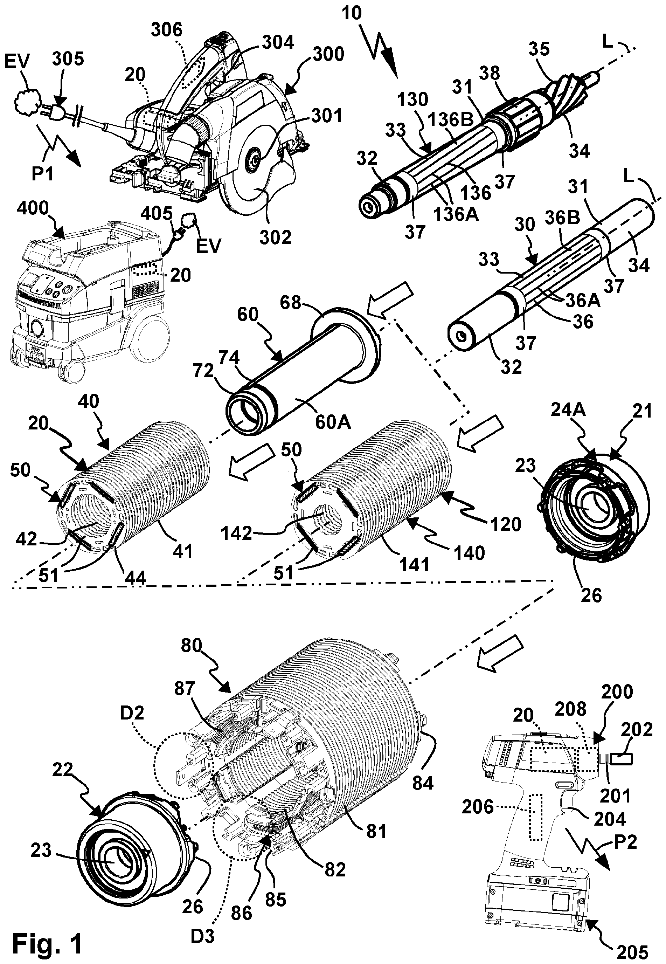

Figur 1 zeigt eine Systemdarstellung umfassend eine Hand-Werkzeugmaschine 300, beispielsweise eine Sägemaschine, bei der ein Antriebsmotor 20 eine Werkzeugaufnahme 301 für ein Arbeitswerkzeug antreibt, beispielsweise direkt oder über ein in der Zeichnung nicht sichtbares Getriebe. An der Werkzeugaufnahme 301 ist ein Arbeitswerkzeug 302, beispielsweise ein Trennwerkzeug, Sägewerkzeug oder dergleichen anordenbar oder angeordnet. Der Antriebsmotor 20 ist in einem Gehäuse 303 der Werkzeugmaschine 300 aufgenommen und kann anhand eines Schalters 304 eingeschaltet und ausgeschaltet werden. Mit dem Schalter 304 ist vorzugsweise auch eine Drehzahl des Antriebsmotors 20 einstellbar.

Zur elektrischen Stromversorgung der Hand-Werkzeugmaschine 300 dient ein Anschlusskabel 305 zum Anschluss an ein Energieversorgungsnetz EV. Das Energieversorgungsnetz EV stellt eine Versorgungsspannung P1 bereit, beispielsweise 110 V Wechselspannung, 230 V Wechselspannung oder dergleichen. Die Hand-Werkzeugmaschine 300 kann eine zwischen dem Schalter 304 und dem Antriebsmotor 20 geschaltete Bestromungseinrichtung 306 aufweisen.

Der Antriebsmotor 20 kann auch zum Betrieb eines Sauggeräts 400, insbesondere zum Antreiben einer Saugturbine des Sauggeräts 400, vorgesehen sein. Das Sauggerät 400 weist den Antriebsmotor 20 auf und ist z.B. anhand eines Anschlusskabels 405 an das Energieversorgungsnetz EV anschließbar.

Die Spannung P1 ist jedenfalls deutlich größer, z.B. mindestens viermal bis fünfmal größer, als eine Spannung P2, die einen Energiespeicher 205 einer Hand-Werkzeugmaschine 200 bereitstellt. Die Spannung P2 ist beispielsweise eine Gleichspannung von 14 V, 18 V oder dergleichen.

Die Hand-Werkzeugmaschine 200 ist beispielsweise eine Schraubmaschine, Bohrmaschine oder dergleichen. In einem Gehäuse 203 der Hand-Werkzeugmaschine 200 ist ein Antriebsmotor 120 aufgenommen, der für die niedrigere Spannung P2 geeignet ist. Der Antriebsmotor 120 wird von einer Bestromungseinrichtung 206 bestromt, die durch den Energiespeicher 205 mit elektrischer Energie versorgt wird. Der Antriebsmotor 120 treibt direkt oder über ein Getriebe 208 eine Werkzeugaufnahme 201 für ein Arbeitswerkzeug 202, beispielsweise ein Bohrwerkzeug oder Schraubwerkzeug, an. Die Bestromungseinrichtung 206 ist durch einen Schalter 204 einschaltbar, ausschaltbar und/oder zur Einstellung einer Drehzahl des Antriebsmotors 120 ausgestaltet.

Die Antriebsmotoren 20, 120 weisen teilweise gleiche oder ähnliche Komponenten auf.

Beispielsweise haben bei den Antriebsmotoren 20, 120 wahlweise verwendbare Motorwellen 30 und 130 jeweils Lagerabschnitte 31, 32, zwischen denen ein Halteabschnitt 33 vorgesehen ist. Der Lagerabschnitt 32 befindet sich neben einem Abtriebsabschnitt 34, der zum Antreiben der Werkzeugaufnahme 201 oder 301 dient. An dem Abtriebsabschnitt 34 kann beispielsweise ein Zahnrad angeordnet sein oder anordenbar sein. Alternativ ist wie bei einer Motorwelle 130 angedeutet eine Verzahnung 35 vorhanden. Der Halteabschnitt 33 weist vorzugsweise eine Formschlusskonturierung 36 auf, die sich zwischen planen, also keine Formschlusskonturierung aufweisenden Abschnitten 37 erstreckt.

Die Formschlusskonturierung 36 umfasst beispielsweise sich parallel zu einer Längsachse L der Motorwelle 30 erstreckende Nuten und/oder Vorsprünge 36A. Aber auch eine Riffelung, wabenartige Struktur oder dergleichen kann als Formschlusskonturierung 36 vorgesehen sein.

Eine Formschlusskonturierung 136 der Motorwelle 130 umfasst beispielsweise schräg zur Längsachse L geneigte Formschlussvorsprünge 136A. Die Formschlussvorsprünge 136A haben jedoch eine geringe Schrägneigung, z.B. zwischen 5 und 15 Grad, so dass die Formschlussvorsprünge 136A im Wesentlichen parallel zur Längsachse L verlaufen.

Die Formschlusskonturierungen 36, 136 bilden beispielsweise Formschlusskonturen 36B, 136B.

Der Abtriebsabschnitt 34 kann zum Antreiben eines Lüfterrads vorgesehen sein. Beispielsweise ist eine Lüfterrad-Halterung 38 an der Motorwelle 130 vorgesehen, die beispielsweise zwischen der Verzahnung 35 und dem Lagerabschnitt 32 angeordnet ist.

Die Motorwelle 30 oder 130 ist drehfest mit einem Blechpaket 41 oder 141 eines Rotors 40, 140 verbindbar. Die Blechpakete 41, 141 weisen in einer Reihenanordnung quer zur Längsachse L nebeneinander angeordnete Bleche 43 auf, beispielsweise Elektrobleche oder Trafobleche in an sich bekannter Art.

Die Blechpakete 41, 141 weisen Wellendurchtrittsöffnungen 42, 142 auf, die unterschiedliche Durchmesser haben. Die Wellendurchtrittsöffnung 42 hat einen größeren Durchmesser als die Wellendurchtrittsöffnung 142. In die Wellendurchtrittsöffnung 42 kann die Motorwelle 30 oder 130 anhand einer Isolationshülse 60 eingesetzt werden, während in die Wellendurchtrittsöffnung 142 die Motorwellen 30 oder 130 unmittelbar eingesetzt werden können, also keine Isolationshülse oder dergleichen anderer Körper notwendig ist.

Die Isolationshülse 60 bildet einen Isolationskörper 60A, anhand dessen das Blechpaket 41 elektrisch von der jeweils es tragenden Motorwelle 30 oder 130 isoliert ist.

An den Blechpaketen 41 und 141 sind Magnetanordnungen 50 angeordnet. Die Blechpakete 41 oder 141 weisen Halteaufnahmen 45 für Magnete 50 der Magnetanordnungen 50 auf. Beispielsweise sind vier Halteaufnahmen 45 und zugeordnete Magnete 51 vorgesehen, so dass der Rotor 40, 140 insgesamt vier magnetische Pole ausbildet. Die Magnete 51 sind z.B. Permanentmagnete.

Die Magnete 51 weisen beispielsweise eine plattenförmige Gestalt auf. Die Magnete 51 sind beispielsweise Magnetplatten oder Plattenkörper 56. Die Halteaufnahmen 45 sind dementsprechend für die Aufnahme von plattenförmigen, also flach rechteckigen, kubischen Plattenkörpern oder Magnetplatten geeignet und weisen entsprechende Innenumfangskonturen auf.

Die Halteaufnahmen 45 und die Magnete 51 erstrecken sich parallel zur Längsachse L der Motorwelle 30, 130 bzw. parallel zur Drehachse D des Motors 20, 120.

Weiterhin ist der Rotor 40, insbesondere als Blechpaket 41, 141, von Luftkanälen 46 durchsetzt, die sich parallel zur Längsachse L der Motorwelle 30, 130 erstrecken und an den Stirnseiten 44 des Rotors 40, 140 offen sind, so dass die Blechpakete 41, 141 mit von Luft durchströmbar sind.

Die Wellendurchtrittsöffnung 42, 142 weist zwar eine im Wesentlichen kreisrunde Innenumfangskontur auf, hat jedoch vorteilhaft zusätzlich noch eine Verdrehsicherungskontur 47, insbesondere eine Verdrehsicherungsaufnahme 47A. Die Verdrehsicherungskontur 47 ist beispielsweise eine Längsnut 47B, die sich parallel zur Drehachse D oder Längsachse L erstreckt.

Beide Motorwellen 30, 130 können jeweils in die Blechpakete 41, 141 eingesetzt werden.

Beim Blechpaket 141, dessen Wellendurchtrittsöffnung 142 einen kleineren Durchmesser aufweist als die Wellendurchtrittsöffnung 42 des anderen Blechpakets 41, kann die jeweilige Motorwelle 30, 130 direkt in die Wellendurchtrittsöffnung 142 eingesteckt werden, z.B. eingepresst werden.

Die Schmalseiten oder Stirnseiten der Bleche 43, die den Innenumfang der Wellendurchtrittsöffnung 42 begrenzen oder in diesen vorstehen, verkrallen sich vorteilhaft mit der Motorwelle 30, 130, so dass diese in einer Kraftrichtung parallel zur Drehachse D oder zu ihrer Längsachse L unverschieblich in dem Blechpaket 141 aufgenommen ist. Eine elektrische Leitfähigkeit des Blechpakets 141 und der vorzugsweise aus Metall bestehenden Motorwelle 30, 130 ist trotz des direkten Kontakts zwischen dem Blechpaket 141 und der Motorwelle 30, 130 möglich, weil der Rotor 140 zur Verwendung mit dem Antriebsmotor 120 und somit für die niedrigere Spannung P2 vorgesehen ist.

Bei dem Rotor 40 hingegen sind Isolationsmaßnahmen getroffen, so dass trotz der elektrischen Leitfähigkeit der Motorwelle 30, 130 und des zugeordneten Blechpakets 41 eine elektrische Sicherheit gegeben ist.

Die Motorwelle 30, 130 ist nämlich anhand einer Isolationshülse 60 im Blechpaket 41 aufgenommen. Die Isolationshülse 60 bildet sozusagen einen Schutzmantel oder eine äußere Umhüllung der Motorwelle 30, 130 in demjenigen Abschnitt, der in der Wellendurchtrittsöffnung 42 aufgenommen ist.

Die Isolationshülse 60 weist zwischen ihren Längsenden 61, 62 einen Rohrabschnitt 63 auf, der sandwichartig zwischen dem Blechpaket 41 und der Motorwelle 30, 130 angeordnet ist und diese gegenüber dem Blechpaket 41 elektrisch isoliert.

Der Rohrabschnitt 63 weist eine Steckaufnahme 64 zum Durchstecken der Motorwelle 30, 130 auf, die sich vom Längsende 61 zum Längsende 62 erstreckt. Im Bereich des Längsendes 61 hat die Steckaufnahme 64 eine Einstecköffnung 64A, durch die die Motorwelle 30 in die Steckaufnahme 64 einsteckbar ist. An einer Austrittsöffnung 64B tritt die Motorwelle 30 aus der Steckaufnahme 64 heraus.

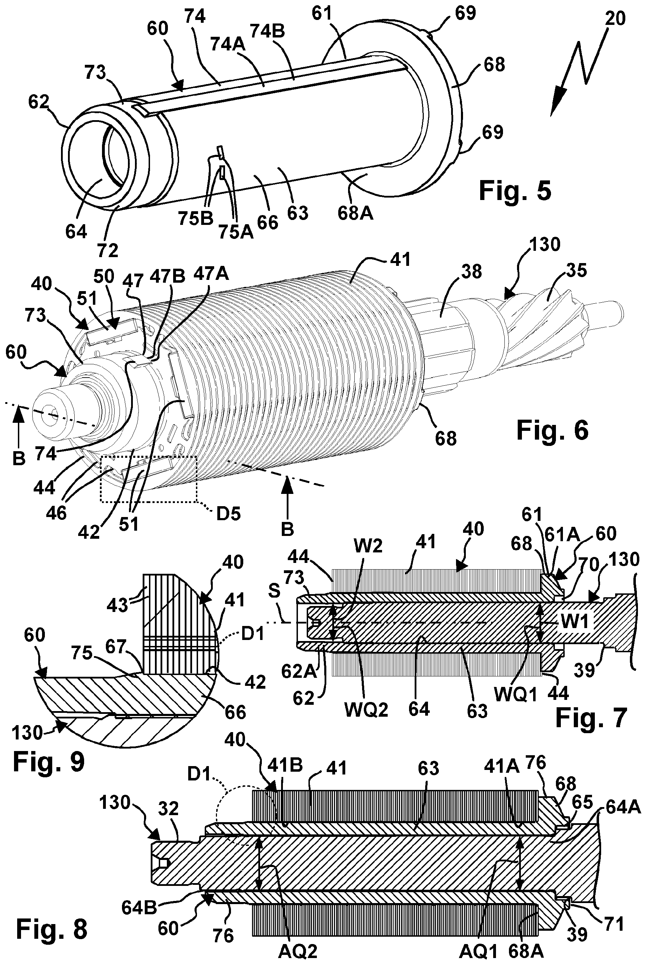

Im Bereich des Längsendes 61, also einem Längsendbereich 61A, hat die Steckaufnahme 64 einen größeren Durchmesser W1 und somit einen größeren Innenquerschnitt WQ1 als im Bereich des Längsendes 62, also einem Längsendbereich 62A, wo ein kleinerer Durchmesser W2 und somit kleinerer Innenquerschnitt WQ2 vorhanden ist. Beispielsweise beträgt der Durchmesser der Motorwelle 30, 130 im Bereich der Längsenden 61, 62 etwa 10 mm. Demgegenüber ist der Durchmesser W2 um ca. 0,2 mm bis 0,3 mm kleiner als der Durchmesser W1, bevor die Motorwelle 30, 130 in die Steckaufnahme 64 eingesteckt wird. Wenn also die Motorwelle 30, 130 wie in Figur 7 angedeutet vom Längsende 61 zum Längsende 62 in die Isolationshülse 60 entlang einer Steckachse S eingesteckt wird, dringt sie zunächst leicht oder mit Querspiel bezüglich der Steckachse S in die Einstecköffnung 64A am Längsende 61 ein, wo die Steckaufnahme 64 den Durchmesser W1 aufweist. Der Durchmesser W1 ist vorteilhaft etwas größer als der Durchmesser der Motorwelle 30, 130 an ihrem freien, zum Einstecken in die Steckaufnahme 64 vorgesehenen Längsende. Der Bereich der Einstecköffnung 64A bildet einen Zentrierabschnitt, in welchem die Motorwelle 30, 130 bezüglich der Isolierhülse 60 oder der Drehachse D zentriert wird. Beispielsweise hat die Motorwelle 30 sowohl im Bereich des Durchmessers W1 als auch im Bereich des Durchmessers W2 denselben Außenquerschnitt oder Außendurchmesser.

Alternativ oder ergänzend möglich ist es, dass beispielsweise die Motorwelle 30 einen ersten Außenquerschnitt AQ1 und einen zweiten Außenquerschnitt AQ2 aufweist, die den Längsenden 61, 62 der Steckaufnahme 64 zugeordnet sind, wobei der erste Außenquerschnitt AQ1 kleiner als der zweite Außenquerschnitt AQ2 ist. Bei dieser Ausgestaltung der Motorwelle 30 ist es auch möglich, dass die Durchmesser W1 und W2 und somit die Innenquerschnitte der Steckaufnahme 64 im Bereich der Längsenden 61 und 62 identisch oder in etwa gleich sind.

Zwischen den Längsenden 61, 62 wird die Steckaufnahme 64 dem Durchmesser W1 zum Durchmesser W2 vorzugsweise kontinuierlich enger. Möglich wäre aber auch, dass zwischen dem Durchmesser W1 und dem Durchmesser W2 mindestens eine Stufe vorhanden ist. Vorteilhaft weist die Steckaufnahme 64 einen Steckkonus auf, der vom Längsende 61 zum Längsende 62 enger wird.

Am Längsende 61 sind vorteilhaft Einführschrägen 65, beispielsweise ein Einführungskonus, vorhanden, um den Einsteckvorgang der Motorwelle 30,130 in die Steckaufnahme 64 zu erleichtern.

Wenn die Motorwelle 30, 130 entlang der Steckachse S in die Steckaufnahme 64 hineingesteckt wird, dringt sie immer weiter in Richtung des Längsendes 62 vor, wobei sie den Rohrabschnitt 63, der zum Längsende 62 hin enger wird, sozusagen aufweitet.

Die Montage gestaltet sich wie folgt:
Zunächst wird die Isolationshülse 60 in die Wellendurchtrittsöffnung 42 des Blechpakets 41 eingesteckt.

Es ist vorteilhaft vorgesehen, dass der Steckquerschnitt oder Innenquerschnitt der Wellendurchtrittsöffnung 42 über seine gesamte zum Einstecken der Isolationshülse 60 vorgesehene Länge gleich oder etwa gleich ist.

Möglich ist es aber auch, dass die Wellendurchtrittsöffnung 42 an einem zum Einstecken der Isolationshülse 60 vorgesehenen Längsendbereich 41A einen größeren Innenquerschnitt aufweist als an einem zu diesem Längsendbereich entgegengesetzten Längsendbereich 41B.

Dann wird die Motorwelle 30, 130 in die Steckaufnahme 64 eingesteckt. Somit presst die Motorwelle 30, 130, wenn sie entlang der Steckachse S in die Steckaufnahme 64 eingesteckt wird, den radialen Außenumfang des Rohrabschnitts 64 in Richtung des radialen Innenumfangs der Wellendurchtrittsöffnung 42. Die Bleche 43 dringen vorzugsweise mit ihren der Wellendurchtrittsöffnung 42 zugewandten Schmalseiten zahnartig in die Umfangswand 66 ein.

Die Steckaufnahme 64 weist den engeren Durchmesser W2 bis in einen Bereich vor dem Blechpaket 41 auf, so dass die Motorwelle 30, 130 dann, wenn sie diesen Bereich der Steckaufnahme 64 erreicht, die Umfangswand 66 des Rohrabschnitts 63 nach radial außen bezüglich der Steckachse S aufweitet und somit das Rohr bzw. den Rohrabschnitt 63 sozusagen dehnt. Dadurch bildet sich eine Formschlusspartie 75 mit einer Stufe 67 am Außenumfang der Umfangswand 63 aus, die unmittelbar in Eingriff bzw. in Hintergriff mit der Stirnseite 44 des Blechpakets 41 gelangt. Die Stufe 63 hält also die Isolationshülse 60 mit einer Kraftrichtung entgegen der Steckrichtung, in der die Motorwelle 30, 130 in die Steckaufnahme 64 einsteckbar ist, an dem Blechpaket 41.

Am anderen Längsendbereich, dem Längsende 61, weist die Isolationshülse 63 einen Flanschkörper 68 auf, der vor den Rohrabschnitt 63 nach radial außen bezüglich der Steckachse S oder der Längsachse L vorsteht.

Der Flanschkörper 68 bildet einen Längsanschlag 68A bezüglich der Steckachse S und stützt sich beispielsweise an der Stirnseite 44 des Blechpakets 41 im Bereich des Längsendes 61 ab. Der Flanschkörper 68 weist beispielsweise Verstärkungsrippen 69 auf, die sich von seinem radialen Außenumfang in Richtung der Steckaufnahme 64, d.h. radial innen zur Steckachse S hin, erstrecken. Die Verstärkungsrippen 69 sind beispielsweise an einer von dem Blechpaket 41 abgewandten Stirnseite 71 des Flanschkörpers 68 angeordnet.

An der Einstecköffnung 64A ist weiterhin ein Stützanschlag 70 für die Motorwelle 30, 130 vorgesehen, an dem ein Stützanschlag 39, beispielsweise einer Stufe, der Motorwelle 30, 130 mit einer Kraftrichtung parallel zur Steckachse S anschlagen kann. Der Stützanschlag 70 ist beispielsweise durch eine Stufe zwischen der Stirnseite 71 der Isolationshülse 60 und der Steckaufnahme gebildet.

Im Bereich des Längsendes 62 oder an der Austrittsöffnung 64B hat die Isolationshülse 60 vorzugsweise einen kleineren Außenumfang oder Durchmesser als im Bereich des Längsendes 61. Beispielsweise sind am Längsende 62 Einführschrägen 72 vorgesehen, die das Einstecken der Isolationshülse 60 in die Wellendurchtrittsöffnung 42 des Blechpakets 41 erleichtern. Das Längsende 62 ist beispielsweise als ein Steckvorsprung ausgestaltet.

Vorzugsweise steht die Isolationshülse 60 am Längsende 62 mit einem einen Isolationsabschnitt 76 bildenden Rohrabschnitt 73 vor die Stirnseite 44 des Blechpakets 41 vor, so dass dort eine elektrische Isolation zwischen einerseits der Motorwelle 30, 130 und andererseits der den Blechen 43 gegeben ist.

Am anderen Längsende 61 hingegen sorgt der Flanschkörper 68, der sozusagen seitlich vor die Wellendurchtrittsöffnung 42 vorsteht oder vorkragt, für eine elektrische Isolation und bildet ebenfalls einen Isolationsabschnitt 76. Somit ergibt sich sowohl im Bereich des Flanschkörpers 68 als auch am Rohrabschnitt 73 ein elektrischer Isolationsabstand von beispielsweise rund 8 mm bis 10 mm, beispielsweise eine Luft- und Kriechstrecke, die zur elektrischen Isolation bezüglich der Spannung P1 geeignet ist.

Am radialen Außenumfang der Isolationshülse 60, insbesondere über die gesamte Längserstreckung des Rohrabschnitts 63, ist vorzugsweise eine Verdrehsicherungskontur 74 zum Eingriff in die Verdrehsicherungskontur 47 des Blechpakets 41 angeordnet. Die Verdrehsicherungskontur 74 ist beispielsweise als Verdrehsicherungsvorsprung 74A, insbesondere als ein Längsvorsprung oder eine Längsrippe 74B ausgestaltet, der oder die sich parallel zur Steckachse S beziehungsweise Drehachse D erstreckt.

Die Isolationshülse 60 ist im Klemmsitz oder Presssitz zwischen der Motorwelle 30, 130 und dem Blechpaket 41 aufgenommen. Dadurch ist ein Kraftschluss realisiert.

Durch die Verdrehsicherungskonturen 47, 74 ist zudem noch ein Formschluss vorhanden, anhand dessen die Isolationshülse 60 bezüglich und/oder quer zur Drehachse D formschlüssig an dem Blechpaket 41 gehalten ist.

Die Formschlusskonturierung 36, 136 der Motorwellen 30, 130 greift zahnartig in den Innenumfang des Rohrabschnitts 63 ein, so dass auch die Motorwelle 30, 130 verdrehsicher bezüglich ihrer Drehachse D oder Längsachse L und/oder verschiebefest bezüglich der Drehachse D oder der Längsachse L in der Isolationshülse 60 aufgenommen ist. Die Formschlusskonturierung 36, 136 bildet vorteilhaft eine Gegen-Formschlusskonturierung am Innenumfang des Rohrabschnitts 36 aus, verformt also beispielsweise den Innenumfang des Rohrabschnitts 63 plastisch, sodass die Formschlusskonturierung 36, 136 mit dieser Gegen-Formschlusskonturierung formschlüssig in Eingriff ist. Die plastische Verformung oder Ausprägung der Gegen-Formschlusskonturierung ergibt sich oder bildet sich beispielsweise beim Einstecken der Motorwelle 30, 130 in die Isolationshülse 60.

Die Isolationshülse 60 ermöglicht es also, dass die Motorwellen 30, 130, die ohne zusätzliche Maßnahmen in das Blechpaket 141 direkt eingesteckt werden können, ohne weiteres auch mit dem Blechpaket 41 verwendbar sind. Es müssen keine unterschiedlichen Motorwellen konstruiert werden. Geometrisch sind die Motorwellen 30, 130 an den Halteabschnitten 33 identisch, die zur Verbindung mit den Blechpaketen 41 oder 141 vorgesehen sind. Beispielsweise sind Länge und Durchmesser der Halteabschnitte 33 identisch. Allerdings ist es möglich, dass zu dem jeweils optimalen Halt des Blechpakets 41 oder 141 unterschiedliche Oberflächen und/oder Oberflächen-Konturierungen im Bereich der Halteabschnitten 33 der Motorwellen 30 und 130 vorgesehen sind.

Vorzugsweise dringen in die Wellendurchtrittsöffnung 42 oder 142 vorstehende Widerlagervorsprünge 43A in den radialen Außenumfang des Rohrabschnitts 63 der Isolationshülse 60 oder den radialen Außenumfang des Halteabschnitts 33 der Motorwelle 30, 130 ein. An der Isolationshülse 60 bilden sich beispielsweise Formschlusspartien 75A, also z.B. Formschlussaufnahmen 75B aus, in die die Widerlagervorsprünge 43A eingreifen, schematisch angedeutet in Figur 5. Der radiale Außenumfang des Rohrabschnitts 63 wird beispielsweise durch die Motorwelle 30 nach radial außen bezüglich der Steckachse S oder der Drehachse D verdrängt, wobei die Widerlagervorsprünge 43A in den Rohrabschnitt 63 eindringen und sich in diesem vorzugsweise verkrallen.

Die Widerlagervorsprünge 43A sind beispielsweise an den der Wellendurchtrittsöffnung 42 oder 142 zugewandten Stirnseiten der Bleche 43 vorgesehen. Zwischen den Widerlagervorsprüngen 43A, insbesondere zwischen Gruppen von Widerlagervorsprüngen 43A sind in Bezug auf die Drehachse D vorzugsweise Abstände vorhanden, beispielsweise Winkelabstände und/oder Längsabstände. Die Widerlagervorsprünge 43A halten die Isolationshülse 60 in der Wellendurchtrittsöffnung 42 oder die Motorwelle 30, 130 in der Wellendurchtrittsöffnung 142 parallel zur Drehachse D und/oder in Umfangsrichtung bezüglich der Drehachse D. Vorzugsweise sind in Winkelabständen um die Drehachse D mehrere Widerlagervorsprünge 43A vorgesehen. Die Isolationshülse 60 wird durch die in sie eingesteckte Motorwelle 30 nach radial außen verdrängt, sodass die Widerlagervorsprünge 43A in den Außenumfang oder den Mantel oder die Umfangswand 66 der Isolationshülse 60 eindringen, insbesondere krallenartig eindringen.

Die Rotoren 40, 140 der Antriebsmotoren 20, 120 können zusammen mit einem Stator 80 verwendet werden, der eine Erregerspulenanordnung 86 aufweist. Die Erregerspulenanordnung 86 kann unterschiedlich ausgestaltete Erregerspulen 87, beispielsweise Erregerspulen 87 mit mehr oder weniger Windungen, mit unterschiedliche Leiterquerschnitten oder dergleichen, aufweisen, um den unterschiedlichen Spannungen P1 und P2 und/oder Stromstärken von Strömen, die die Erregerspulen 87 durchströmen, gerecht zu werden.

Der Stator 80 weist ein Blechpaket 81 mit einer als Durchtrittsöffnung ausgestalten Rotoraufnahme 82 für den Rotor 40, 140 auf. In der Rotoraufnahme 82 ist der Rotor 40, 140 drehbar aufgenommen, wobei ein schmaler Luftspalt zwischen dem Blechpaket 81 und dem Blechpaket 41, 141 in an sich bekannter Weise vorhanden ist.

Das Blechpaket 81 weist Bleche 83, beispielsweise Elektrobleche oder Trafobleche, auf, deren Plattenebene sich quer zur Drehachse D des Antriebsmotors 20, 120 erstreckt. Die jeweilige Motorwelle 30, 130 steht vor Stirnseiten 84, 85 des Blechpakets 81 vor, wo sie an Lagern 24, 25 einer Lageranordnung 24A drehbar gelagert ist.

Die Lager 24, 25 sind an Lageraufnahmen 23 von Lagerdeckeln 21, 22 gehalten, die den Stator 80 stirnseitig verschließen.

Die Lager 24, 25 können in die Lageraufnahmen 23 der Lagerdeckel 21, 22 eingesetzt, insbesondere eingepresst, sein. Es ist aber auch möglich, dass die Lager 24, 25 mit dem Material der Lagerdeckel 21, 22 umspritzt oder vergossen sind.

Beispielsweise sind die Lagerdeckel 21, 22 mit dem Blechpaket 41 oder einem das Blechpaket 41 tragenden Trägerkörper 90 fest verbunden, beispielsweise verschraubt, verklebt oder vorzugsweise verschweißt.

Die Lagerdeckel 21, 22 sowie der Trägerkörper 90 sind vorzugsweise aus Kunststoff, insbesondere aus einem thermoplastischen Kunststoff. Vorzugsweise ist für die Lagerdeckel 21, 22 sowie den Trägerkörper 90 derselbe Kunststoff verwendet, beispielsweise derselbe thermoplastische Kunststoff.

Beispielsweise ist der Trägerkörper 90 in einem Guss-Verfahren hergestellt, bei dem das Blechpaket 81 vergossen wird.

Der Trägerkörper 90 weist Lagerdeckel-Aufnahmen 91 für die Lagerdeckel 21, 22 auf. In die Lagerdeckel-Aufnahmen 91 sind z.B. Umfangswände 26 der Lagerdeckel 21, 22 einsteckbar, z.B. mit ihren die Stirnseiten.

Der Lagerdeckel 21 ist näher beim Abtriebsabschnitt 34 der Motorwelle 30, 130 angeordnet. Der Lagerdeckel 22 am davon entfernteren Bereich. Die Lagerdeckel 21, 22 verschließen das Blechpaket 81 aneinander entgegengesetzten Längsendbereichen. Der Lagerdeckel 21 steht weniger weit vor die Stirnseite des Blechpakets 41, 141 vor als der Lagerdeckel 22. Der Lagerdeckel 21 weist einen Aufnahmeraum 21A für den Flanschkörper 68 auf.

Das Lager 24 ist näher bei den potentiell stromführenden Blechpaketen 41, 81 als das Lager 25.

Das Lager 24 und das Lager 25 sind zwar elektrisch leitend mit dem Lagerabschnitt 31 und somit der Motorwelle 30, 130 verbunden, so dass an sich die Gefahr besteht, dass eine Spannung von der Erregerspulenanordnung 86 auf die Motorwelle 30, 130 überspringt.

Durch den elektrisch isolierenden Flanschkörper 68 jedoch ist ein ausreichender elektrischer Isolationsabstand gegeben, so dass diese Gefahr nicht mehr besteht.

Das Lager 25 hingegen hat einen größeren Längsabstand in Bezug auf die Drehachse D zur Stirnseite der Blechpakete 41, 81, so dass auch hier die Gefahr eines elektrischen Überschlags von beispielsweise der Erregerspulenanordnung 86 auf die Motorwelle 30, 130 im Bereich des Lagers 25 nicht droht. Zudem sorgt der elektrisch isolierende Rohrabschnitt 73 der Isolationshülse 60, der vor das Blechpaket 41 in Richtung des Lagerdeckels 22 vorsteht, für eine ausreichende elektrische Isolation.

Die Spulenleiter 88 der Erregerspulen 87 verlaufen im Blechpaket 81 durch Nuten 89 hindurch, die beispielsweise parallel zur Drehachse D oder schräg dazu geneigt angeordnet sind. Die Nuten 89 haben Einführöffnungen 89D, die zu einem Innenumfang 82A der Rotoraufnahme 82 offen sind. Die Nuten 89 erstrecken sich zwischen den Stirnseiten 84, 85. Durch die Einführöffnungen 89D können die Spulenleiter 88 in die Nuten 89 eingebracht werden und beispielsweise um Wickelköpfe oder Wickelhämmer des Blechpakets 81 herum gewickelt werden.

Zwar sind die der Rotoraufnahme 82 des Stators 80 zugewandten Abschnitte des Blechpakets 81, die sich zwischen den Nuten 89 befinden, durch eine Innenverkleidung 92 abgedeckt, beispielsweise mit Kunststoff umspritzt, jedoch die Nuten 89 zunächst offen, so dass die Spulenleiter 88 in sie hineingelegt werden können.

Die Erregerspulen 87 sind weiterhin um Stützvorsprünge 93 an der Stirnseite 84 des Stators 80 herumgewickelt, die sozusagen Wickelköpfe bilden.

An der entgegengesetzten Stirnseite 85 sind Stützvorsprünge 94 vorgesehen, die ebenfalls zum Umwickeln mit Spulenleitern von Erregerspulen geeignet sind, jedoch in manchen Ausführungsformen nicht umwickelt sind.

Die Stirnseite 85 stellt sozusagen die Anschlussseite des Antriebsmotors 20, 120 dar. Dort sind elektrische Anschlusseinrichtungen 100 vorgesehen, an die beispielsweise Anschlussleitungen 15 zur elektrischen Verbindung mit der Bestromungseinrichtung 206, 306 anschließbar oder angeschlossen sind. Die Anschlussleitungen 15 weisen einen Steckverbinder zum Anstecken an eine Bestromungseinrichtung 206, 306 auf. Die Anschlusseinrichtungen 100 kann man auch als Terminals bezeichnen.

Die Anschlussleitungen 15 können beispielsweise an die Anschlusseinrichtungen 100 angesteckt sein oder auch mit diesen direkt verlötet sein. Die Anschlusseinrichtungen 100 weisen beispielsweise als Kontaktvorsprünge ausgestaltete Anschlusskontaktbereiche 101 auf, an die Anschlussstecker, die mit den Anschlussleitungen verbunden sind, angesteckt werden können. Des Weiteren sind an den Anschlusskontaktbereichen 101 Löcher 102 vorgesehen, durch die beispielsweise ein Anschlussleiter der Anschlussleitungen 15 hindurch geführt und mit der Anschlusseinrichtung 100 verlötet oder in sonstiger Weise elektrisch verbunden sein kann. Beispielsweise wäre auch eine Verschweißung eines derartigen Anschlussleiters mit der Anschlusseinrichtung 100 ohne weiteres möglich.

Die Anschlusseinrichtungen 100 sind mit einer Steckmontage am Trägerkörper 90 anordenbar. Der Trägerkörper 90 weist Halter 95 für die Anschlusseinrichtungen 100 auf. Die Halter 95 umfassen Steckaufnahmen 96, in die die Anschlusseinrichtungen einsteckbar sind. Die Steckaufnahmen 96 sind zwischen Aufnahmevorsprüngen 97, die vor die Stirnseite 85 des Trägerkörpers 90 vorstehen, vorgesehen. Beispielsweise haben die Aufnahmevorsprünge 97 einander gegenüberliegende Nuten 98, in die seitlich vor die Anschlusseinrichtungen 100 vorstehende Steckvorsprünge 104 einsteckbar sind, beispielsweise in der Art einer Nut-und-Feder-Verbindung.

Die Steckvorsprünge 104 stehen seitlich vor einen Grundkörper 103 einer jeweiligen Anschlusseinrichtung 100 vor. Die Steckvorsprünge 103 stehen quer zur Längserstreckung des Anschlusskontaktbereichs 101 vor den Grundkörper 103 vor. Die Steckvorsprünge 104 und der Anschlusskontaktbereich 101 bilden eine insgesamt etwa T-förmige Konfiguration. Beispielsweise bildet der Grundkörper 104 sozusagen einen Grundschenkel, von dem die Steckvorsprünge 104 in der Art von Seitenschenkeln seitlich vorstehen. Allerdings sind die Grundebenen der Steckvorsprünge 104 und des Grundkörpers 103 verschieden. Zwischen dem Grundkörper 103 und den Steckvorsprüngen 104 ist ein beispielsweise S-förmiger oder einander entgegengesetzte Krümmungen oder Bogenabschnitte aufweisender Übergangsabschnitt 106 vorgesehen. Mithin stehen also die Steckvorsprünge 104 vor eine Rückseite 115 des Grundkörpers 103 vor.

An den freien, vor dem Grundkörper 103 vorstehenden Endbereichen haben die Steckvorsprünge 104 Formschlusskonturen 105, insbesondere Zahnungen 105A, Widerhaken oder dergleichen, mit denen ein formschlüssiger Halt in der Steckaufnahme 96 möglich ist. Vorzugsweise können die Steckvorsprünge 104 sich anhand der Formschlusskonturen 105 sozusagen in der Steckaufnahme 96 des Trägerkörpers 90 verkrallen. Insbesondere führt ein Anschmelzen des Trägerkörpers 90 im Bereich der Steckaufnahmen 96, insbesondere der Nuten 98, beim Erhitzen der Anschlusseinrichtung 100, was nachfolgend noch beschrieben wird, dazu, dass sich eine formschlüssige Verbindung zwischen einerseits den Steckvorsprüngen 104, insbesondere deren Formschlusskonturen 105, und andererseits dem Material des Trägerkörpers 90 im Bereich der Steckaufnahme 96, insbesondere im Bereich der Nuten 98, hergestellt ist.

Die Zahnung 105A weist beispielsweise eine Verschränkung auf, d.h. dass beispielsweise ein Zahn 105B quer zur Hauptebene des Steckvorsprungs 104 vor diesen vorsteht.

Die Anschlusseinrichtungen 100 weisen Leiteraufnahmen 107 zur Aufnahme des jeweils anzuschließenden Abschnitts eines Spulenleiters 88 auf. Die Leiteraufnahmen 107 sind zwischen einerseits der Frontseite 114 des Grundkörpers 103 und andererseits einem Aufnahmearm 108 der Anschlusseinrichtung 100 gebildet, der anhand eines Verbindungsabschnitts 109 mit dem Grundkörper 103 verbunden ist. Insbesondere vorteilhaft ist es, wenn der Grundkörper 103, der Verbindungsabschnitt 109 und der Aufnahmearm 108 einstückig sind. Auch die Seitenschenkel oder Steckvorsprünge 104 des Grundkörpers 103 sind vorzugsweise mit diesem einstückig. Eine der Leiteraufnahme 107 zugewandte Innenseite des Verbindungsabschnitts 109 bildet einen Aufnahmeabschnitt oder eine Aufnahmemulde 116A der Leiteraufnahme 107.

Die Leiteraufnahme 107 weist im Bereich der Aufnahmemulde 116 A eine Auflagefläche 107A sowie eine dazu winkelige Schmalseite 107B auf. Zwischen der Schmalseite 107B und der großen Auflagefläche 107A ist eine zur Auflagefläche 107A und zur Schmalseite 107B schräggeneigte Schrägfläche 107C zum Abstützen des mindestens einen Spulenleiters 88 angeordnet. Die Schrägfläche 107C kann beispielsweise eine Fase, eine gekrümmte oder bogenförmige Fläche oder dergleichen sein. Jedenfalls verhindert die Schrägfläche 107C dass der Spulenleiter 88 auf einer scharfen Kante aufliegt.

Vorteilhaft ist die Anschlusseinrichtung 100 als ein Stanz-Biegeteil ausgestaltet, welches zunächst aus einem Grundmaterial ausgestanzt und dann durch entsprechende Umformung in die bisher beschriebene Gestalt gebracht ist.

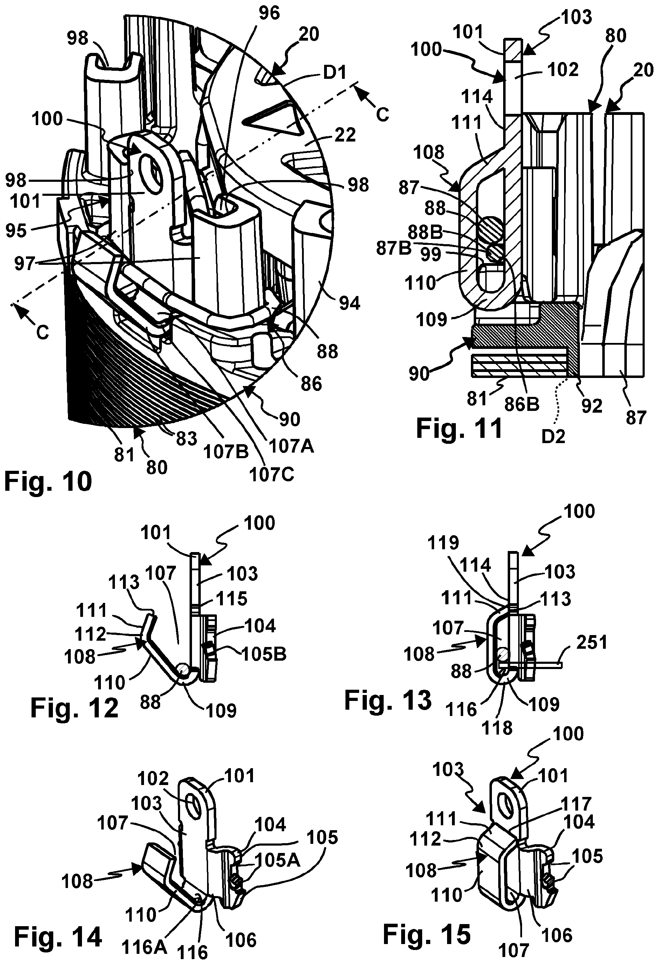

Die Montage und/oder Befestigung und/oder elektrische Kontaktierung des Spulenleiters 88 in der Leiteraufnahme 107 gestaltet sich wie folgt:
Zunächst ist die Leiteraufnahme 107 offen, indem nämlich der Aufnahmearm 108 noch weit von dem Grundkörper 103 absteht, siehe z.B. Figur 12 und 14. Der Spulenleiter 88 kann dabei bis zum Boden 116, d.h. den Innenumfang des Verbindungsabschnitts 109, der Leiteraufnahme 107 gelangen, siehe z.B. Figur 12. Diese Konfiguration ist aber eher unerwünscht, so dass durch zusätzliche Stützmaßnahmen, beispielsweise durch eine Stütze 251 einer Montageeinrichtung 250, der Spulenleiter 88 in einer vom Boden 116 der Leiteraufnahme 107 entfernten Lage gehalten wird.

Bevorzugt ist die Konfiguration jedoch so getroffen, dass der Trägerkörper 90 eine Stützkontur 99 aufweist, auf der der Spulenleiter 88 bei der Montage bzw. beim Schließen der Anschlusseinrichtung 100 abgestützt ist, siehe Figur 10 und 11. Der Spulenleiter 88 liegt also auf der Stützkontur 99 auf, so dass er den Boden 116 nicht berührt. Die Stützkontur 99 ist beispielsweise an einer von den Nuten 98 abgewandten Außenseite der Aufnahmevorsprünge 97 vorgesehen. Beispielsweise ist die Stützkontur 99 als eine Stufe zwischen dem jeweiligen Aufnahmevorsprung 97 und der Partie des Trägerkörpers 90, von dem der Aufnahmevorsprung 97 absteht, ausgestaltet.

Die vom Boden 116 abgehobene Position des Spulenleiters 88 ist für die nachfolgende Schließ- und Schweiß-Operation vorteilhaft. Sie ist insbesondere dann vorteilhaft, wenn Spulenleiter mit kleinem Querschnitt verwendet werden, z.B. ein Spulenleiter 88B (Figur 11). Dieser Spulenleiter 88B kann selbst dann einen Abstand zum Boden 116, der sich beim nachfolgend beschriebenen Schweißvorgang deutlich erhitzt, aufweisen, wenn der Aufnahmearm 108 zum Grundkörper 103 hinbewegt ist, so dass er mit seinem freien Ende 113 an der Frontseite 114 des Grundkörpers 103 anliegt.

Der Spulenleiter 88B bildet z.B. einen Bestandteil einer Erregerspule 87B einer Erregerspulenanordnung 86B.

Der Aufnahmearm 108 hat an seinem vom Verbindungsabschnitt 109 abgewandten Endbereich einen Schließschenkel 111, der von einem mittleren Armabschnitt 110 des Aufnahmearms 108 winkelig absteht. Beispielsweise ist ein Krümmungsabschnitt oder Verbindungsabschnitt 112 zwischen dem mittleren Armabschnitt 110 und dem Schließschenkel 111 vorgesehen. Der Schließschenkel 111 steht vom mittleren Armabschnitt 110 in Richtung der Frontseite 114 des Grundkörpers 103 vor, so dass sein freies Ende 113 die Frontseite 114 im geschlossenen Zustand der Leiteraufnahme 107 berührt, während zwischen dem mittleren Armabschnitt 110 und der Frontseite 114 des Grundkörpers 103 ein Abstand vorhanden ist, der die Leiteraufnahme 107 definiert.

Zum Schließen der Anschlusseinrichtungen 100 und Verschweißen dient eine Schweißzange 252 der Montageeinrichtung 250. Die Schweißzange 252 weist Zangenarme 253, 255 auf, an deren freien Endbereichen, die zum Kontakt mit der Anschlusseinrichtung 100 vorgesehen sind, Stützflächen 254, 256 vorgesehen sind. Die freien Endbereiche der Zangenarme 253, 255, die zum Eingriff mit der Anschlusseinrichtung 100 vorgesehen sind, laufen spitz zu, bilden also Spitzen 257 aus. Insbesondere beim Zangenarm 253, der an der Rückseite 115 der Anschlusseinrichtung 100 mit seiner Stützfläche 254 abstützend wirkt, ist diese spitze, schlanke Ausgestaltung des Zangenarms 253 vorteilhaft.

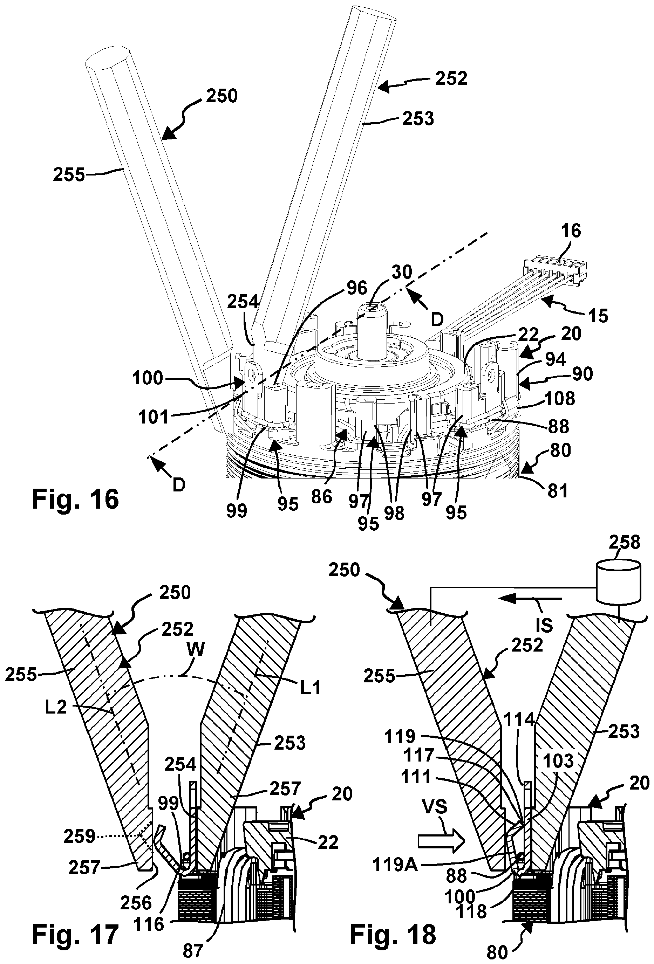

Die Zangenarme 253, 254 sind V-förmig angeordnet, dass die Spitzen 257 voneinander entgegengesetzten Seiten an der Anschlusseinrichtung 100 angreifen (siehe Figur 16), diese schließen und anschließend verschweißen.

Vorzugsweise verlaufen Längsachsen L1, L2 der Zangenarme 253, 255 in einem Winkel W, insbesondere etwa 20° bis 40°. Dadurch kann insbesondere die Spitze 257 des Zangenarms 253 in den Zwischenraum zwischen Lagerdeckel 22 und Rückseite 115 der Anschlusseinrichtung 100 gelangen und dort mit seiner Stützfläche 254 den Grundkörper 103 abstützen.

Der Zangenarm 254 wirkt im Sinne eines Schließens der Leiteraufnahme 107 auf den Aufnahmearm 108 ein. Beispielsweise liegt der Krümmungsabschnitt 112 an der Stützfläche 256 des Zangenarms 255 an. Die Stützflächen 254, 256 sind parallel oder im Wesentlichen parallel zueinander orientiert, wenn die Stützfläche 254 zur Stützfläche 256 hinbewegt wird, was als Vorschubbewegung VS in der Zeichnung dargestellt ist. Mithin bleibt also der Zangenarm 253 ortsfest stehen und stützt die Anschlusseinrichtung 100 rückseitig ab, während der Zangenarm 255 den Aufnahmearm 108 in Richtung des Grundkörpers 103 verstellt. Dann gelangt dessen freies Ende 113 seines Schließschenkels 111 in Kontakt mit der Frontseite 114 des Grundkörpers 103 der Anschlusseinrichtung 100. Mithin ist also die Leiteraufnahme 107 dann geschlossen und es ist eine Aufnahmeöse 119A gebildet.

Es ist auch möglich, dass eine Schweißzange oder dergleichen andere Fräseinrichtung den Aufnahmearm 108 aus einer zunächst langgestreckten, geradlinigen Form, bei der der Schließschenkel 111 beispielsweise noch nicht ausgebildet ist, zu einem Aufnahmearm 108 mit Schließschenkel 111 umformt, zum Beispiel anhand einer schematisch angedeuteten Verformungskontur 259 am Zangenarm 255.

Sodann werden die Zangenarme 253, 255 durch eine Bestromungseinrichtung 258 bestromt, indem die Zangenarme 253, 255 unterschiedliche Potentiale aufweisen und somit einen Stromfluss durch die Anschlusseinrichtung 100 erzeugen.

Der Schweißstrom IS fließt durch die sozusagen ringförmig geschlossene Anschlusseinrichtung 100, d.h. durch diejenigen Partien der Anschlusseinrichtung 100, die die Leiteraufnahme 107 verschließen, nämlich den Grundkörper 103 im Bereich der Leiteraufnahme 107 sowie den Aufnahmearm 108. Der Schweißstrom IS fließt dabei über Verbindungsbereiche 118 und 119, nämlich zum einen über den Verbindungsabschnitt 109, zum anderen aber auch über einen Kontaktbereich 117 zwischen dem freien Ende 113 des Schließschenkels 111 und der Frontseite 114 des Grundkörpers 103. Sowohl im Kontaktbereich 117 als auch im Bereich des Bodens 116 tritt eine große Hitze auf, die jedoch die Spulenleiter 88 oder 88B nicht beschädigt, weil diese einen Abstand zum Boden 116, aber auch zum oberen Kontaktbereich 117 aufweisen. Gleichwohl wird die Anschlusseinrichtung 100 im Bereich der Leiteraufnahme 107 derart heiß, dass ein Lack oder dergleichen andere Isolation der Spulenleiter 88 schmilzt und diese in elektrischen Kontakt mit den Oberflächen der Anschlusseinrichtung 100 gelangen.

Mithin wird also die Anschlusseinrichtung 100 sozusagen mechanisch geschlossen und anschließend mit denjenigen Spulenleitern 88 verschweißt, die in der Leiteraufnahme 107 aufgenommen sind. Die Montage ist einerseits schonend für die Spulenleiter 88, andererseits aber auch zuverlässig und dauerhaft belastbar, weil nämlich die Spulenleiter 88 durch den vorgenannten Pressvorgang und den Schweißvorgang zwar mechanisch etwas verändert werden können, jedoch nicht derart geschwächt werden oder in ihrer Querschnittsgeometrie verändert werden, dass sie beispielsweise beim Betrieb des Antriebsmotors 20, 120 brechen.

Wenn die Erregerspulen 87 in die Nuten 89 eingelegt sind, werden sie durch Nutabdeckungen 180 verschlossen.

Die Nutabdeckungen 180 weisen einen Profilkörper 181 auf. Die Nutabdeckungen 180 bestehen vorzugsweise aus Kunststoff und/oder einem elektrisch isolierenden Material. Der Profilkörper 181 ist beispielsweise als Kunststoffteil oder Kunststoff-Wandkörper ausgestaltet.

Der Profilkörper 181 bildet einen Wandkörper 182, der sozusagen eine Verschlusswand für eine jeweilige Nut 89 darstellt.

Die Nutabdeckung 180 oder der Profilkörper 181 weist eine Längsgestalt auf und erstreckt sich entlang einer Längsachse L8, die parallel zu einer Längsachse L9 der Nut 89 verläuft, wenn die Nutabdeckung 180 in der Nut 89 montiert ist. Längsschmalseiten oder Längsseiten 195 der Nutabdeckung 180 erstrecken sich entlang der Längsachse L8. Die Längsseiten 195 weisen quer zur Längsachse L8 einen Querabstand Q auf.

Längsendbereiche 183 der Nutabdeckung 180 stehen vorzugsweise bis zum Trägerkörper 90 vor das Blechpaket 81 vor, so dass eine elektrische Isolation über die gesamte Länge einer Nut 89 gegeben ist. Dort ist beispielsweise eine Verklebung, Verschweißung oder dergleichen andere Befestigung an einem oder beiden der Lagerdeckel 21 oder 22 vorteilhaft.

Die Nutabdeckung 181 weist einen Wandabschnitt 184 auf, der die Nut 88 quer zur Längsachse L8 vollständig abdeckt. Der Wandabschnitt 184 ist im Querschnitt, also quer zur Längsachse L8, etwa U-förmig oder bogenförmig und bildet an seinen Querendbereichen, also quer zur Längsachse L8, Formschlussvorsprünge 186 auf, die zum Eingriff in Formschlussaufnahmen 89B der Nuten 89 vorgesehen sind. Quer zur Längsachse L8 hat die Nutabdeckung 180 zwei Formschlussaufnahmen 186, die quer zur Längsachse L8 am weitesten vorstehende Abschnitte der Nutabdeckung 180 bilden und/oder einander gegenüberliegen. Die Formschlussvorsprünge 186 und die Formschlussaufnahme 89B bilden Formschlusskonturen 185, 89A, die die Nutabdeckung 180 quer zur Längsachse L8, die gleichzeitig die Längsachse der Nut 89 darstellt, in der Nut 89 halten.

Der Wandabschnitt 184 bildet zwischen den Formschlusskonturen 185 eine wannenförmige Gestalt aus, weist also einen Boden 187 auf. Der Boden 187 ist beispielsweise in die jeweilige Nut 89 hineingewölbt, erstreckt sich also in diese hinein. Selbstverständlich wäre auch eine umgekehrte Konfiguration möglich, bei der der Wandabschnitt 184 nicht nach radial außen bezüglich der Drehachse D, sondern nach radial innen vorsteht. Dort wäre er aber gegebenenfalls dem Rotor 40, 140 im Wege.

Von dem Wandabschnitt 184 erstrecken sich Seitenschenkel 188 weg. Die Seitenschenkel 188 sind aufeinander zugeneigt, d.h. ihre vom Wandabschnitt 184 entfernten freien Endbereiche sind einander zugeneigt. Somit bilden die Seitenschenkel 188 und der Wandabschnitt 184 im Übergangsbereich zu den Seitenschenkeln 188 die in Seitenansicht V-förmige Formschlusskontur 185, also einen Formschlussvorsprung 186, aus.

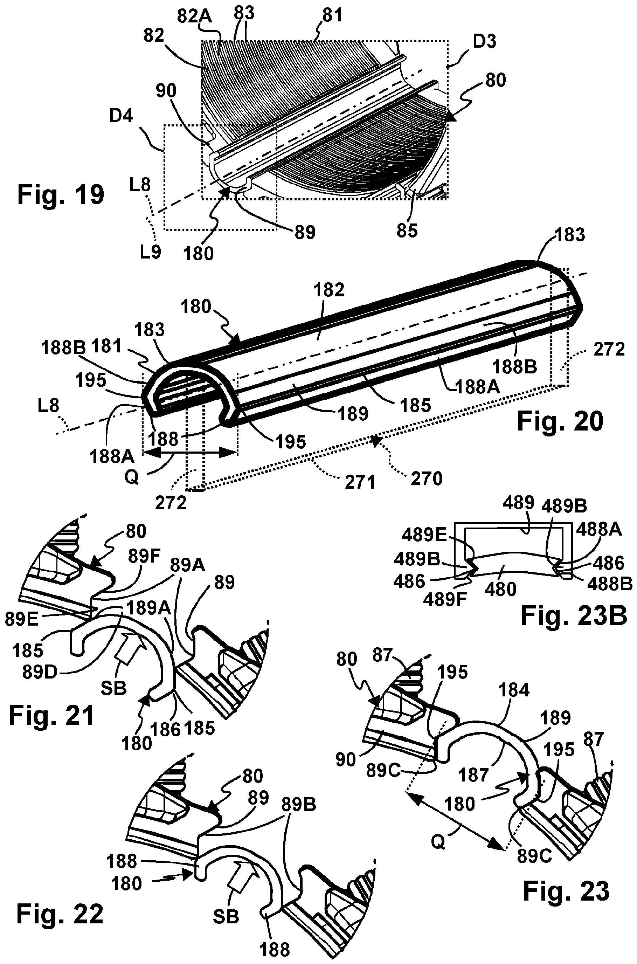

Die Montage der Nutabdeckung 180 gestaltet sich wie folgt:
An sich wäre es zwar möglich, die Nutabdeckung 180 beispielsweise von einer der Stirnseiten 84 oder 85 hier in eine jeweilige Nut 89 einzuschieben, d.h. entlang einer Steckachse, die parallel zur Drehachse D verläuft. Allerdings sind die Formschlusskonturen 185 quer zur Längsachse L8 aufeinander zu bewegbar, so dass ein Querabstand Q zwischen den Formschlusskonturen 185 verkleinerbar ist, so dass die Nutabdeckung 180 an einer Seitenkante 89C der Nut 89 vorbei in die Nut 89 hinein verschoben werden kann, siehe dazu Figuren 21 bis 23. Dabei gleitet der Wandabschnitt 184 mit seiner gerundeten Außenseite 189, also an seiner dem Boden 187 entgegengesetzten Seite, die insoweit eine Verdrängungskontur 189A bildet, an der Seitenkanten 89C vorbei, wobei der Wandabschnitt 184 biegeflexibel nachgibt, insoweit also einen biegeflexiblen Abschnitt 194 bildet. Dabei werden die Seitenschenkel 188 und die Formschlusskonturen 185 im Sinne einer Verengung des Querabstands Q aufeinander zu bewegt und rasten schließlich am Ende dieser Steckbewegung SB die Nutabdeckung 180 in die Nut 89 ein, d.h. die Formschlusskonturen 185 gelangen in Eingriff mit den Formschlusskonturen 89A.

Die Nutabdeckung 180 ist dann in der Nut 89 formschlüssig auf genommen, nämlich in zwei zueinander orthogonalen Richtungen quer zur Längsachse L8.

Eine von der Rotoraufnahme 82 abgewandte Fläche der Formschlussaufnahme 89B bildet eine Hintergreifkontur 89E. Eine der Rotoraufnahme 82 zugewandte Fläche der Formschlussaufnahme 89B bildet eine Stützkontur 89F.

Die Hintergreifkontur 89E und und/oder die Stützkontur 89F sind vorzugsweise flächig.

Bevorzugt stützen die Hintergreifkontur 89E und/oder die Stützkontur 89F die Nutabdeckung 180 über deren gesamte Längsachse L8 ab.

Die Seitenschenkel 188 weisen Hintergreifflächen 188A auf, die sich an der Hintergreifkontur 89E abstützen. An die Seitenschenkel 188 angrenzende Abschnitte des Wandabschnitts 184 weisen Stützflächen 188B auf oder bilden diese Stützflächen, die sich an den Stützkonturen 89F abstützen. Somit stützen die Hintergreifkonturen 89A die Nutabdeckung 180 in Richtung des Innenraums der Rotoraufnahme 82 oder der Drehachse D ab und die Stützkonturen 89F entgegengesetzt dazu, also in Richtung nach radial außen bezüglich der Drehachse D oder eines Bodens der jeweiligen Nut 89.

Der Vorteil dieser Konstruktionsmethode ergibt sich auch dadurch, dass beispielsweise der Trägerkörper 90 an den Längsendbereichen der Nut 89 nach radial innen in Richtung der Rotoraufnahme 82 etwas vorstehen kann, wenn die Nutabdeckungen 180 montiert werden. Deren Längsendbereiche 183 können nämlich dann in Hintergriff in Richtung der Rotoraufnahme 82 des vorstehenden Abschnitts des Trägerkörpers 90 gebracht werden.

Weiterhin liegen die Hintergreifflächen 188A und die Hintergreifkonturen 89E sowie die Stützflächen 188B und die Stützkonturen 89F flächig aneinander an, sodass ein Dichtsitz oder eine Abdichtung der Nut 89 realisiert ist und/oder die Nutabdeckung 180 die Nut 89 dicht verschließt.

Vorteilhaft haben die Nutabdeckungen 180 eine Dichtfunktion zur Abdichtung der Nuten 89, jedoch keine Stützfunktion für die Erregerspulen 87 der Erregerspulenanordnung 86. Die Schrägneigung der Hintergreifkonturen 89E und der Hintergreifflächen 188A wirkt vielmehr sogar im Sinne einer Löseschräge, die bei einer Kraftbeaufschlagung der Nutabdeckung 180 in einem Sinne aus der Nut 89 heraus oder nach radial innen bezüglich der Drehachse D eine Verformung oder Verschmälerung der Nutabdeckung 180 bewirkt und somit deren Lösen aus der Nut 89 erleichtert oder ermöglicht.

Ein alternatives Ausführungsbeispiel gemäß Figur 23B, das nur schematisch dargestellt ist, sieht beispielsweise eine alternativ zur Nut 89 ausgestaltete Nut 489 vor, in die eine Nutabdeckung 480 eingebracht ist. Die Nutabdeckung 480 weist an ihren Längsschmalseiten Formschlussaufnahmen 486 auf, die in Eingriff mit Formschlussvorsprüngen 489B der Nut 489 sind. Die Formschlussvorsprünge 489B liegen einander gegenüber. Die Formschlussaufnahmen 486 und die Formschlussvorsprünge 489B sind zueinander komplementär, beispielsweise V-förmig.

Von der Rotoraufnahme 82 abgewandte Flächen der Formschlussvorsprünge 489B bilden Hintergreifkonturen 489E. Der Rotoraufnahme 82 zugewandte Flächen der Formschlussvorsprünge 489B bilden Stützkonturen 489F. Die Hintergreifkontur 489E und und/oder die Stützkontur 489F sind vorzugsweise flächig. Bevorzugt stützen die Hintergreifkontur 489E und/oder die Stützkontur 489F die Nutabdeckung 480 über deren gesamte Längsachse L8 ab. Die Längsseiten der Nutabdeckung 480 oder die Formschlussaufnahmen 486 weisen Hintergreifflächen 488A auf, die sich an den Hintergreifkonturen 489E abstützen. Die die Formschlussaufnahmen 486 weisen ferner Stützflächen 488B auf oder bilden diese Stützflächen, die sich an den Stützkonturen 489F abstützen.

Der mechanische Aufbau des Stators 80 ist für beide Spannungsniveaus P1 und P2 vorzugsweise ganz oder teilweise identisch. Insbesondere ist die Rotoraufnahme 82 für den Rotor 40, 140 identisch, weist also beispielsweise den gleichen Durchmesser auf. Auch die Ausgestaltung der Nuten 89, also beispielsweise deren Formschlusskonturen 89A und/oder deren Breite und/oder Tiefe sind identisch. Vorteilhaft ist auch, wenn die Nutabdeckung 180 am Stator 80 unabhängig davon verwendbar oder verwendet ist, ob die Erregerspulenanordnung 86 für die Spannung P1 oder die Spannung P2 ausgestaltet und/oder angeordnet ist. Dadurch ist ein weitgehendes Gleichteilprinzip realisierbar.

Es ist möglich, die Nutabdeckungen 180 als einzelne Profilstücke bereitzustellen, d.h. dass sie bereits die in Figur 20 dargestellte langgestreckte Gestalt haben und der Länge der Nut 89 entsprechende Längen aufweisen.

Eine vorteilhafte Ausführungsform sieht jedoch vor, dass die Nutabdeckungen 180 aus einem Rollenmaterial 190 gewonnen werden. Das Rollenmaterial 190 steht beispielsweise als ein Wickel 191 bereit. Der Wickel 191 ist beispielsweise an einem Wickelträger 273, insbesondere einem entsprechenden Haltegestell, drehbar aufgenommen. Eine Abwicklungseinrichtung 274 wickelt das Rollenmaterial 190 von dem Wickel 191 ab.

Ein vom Wickel 191 abgewickelter Abschnitt 192 des Rollenmaterials 190 durchläuft beispielsweise eine Rollenanordnung 275 mit einer oder mehreren Rollen, insbesondere Umlenkrollen oder Führungsrollen.

Stromabwärts der Rollenanordnung 275 ist eine Glättungseinrichtung 276 vorgesehen, in der der Abschnitt 192 geglättet wird, so dass seine ursprünglich auf dem Wickel 191 gerundete Gestalt in eine langgestreckte Gestalt überführt wird. Die Glättungseinrichtung 276 umfasst beispielsweise mindestens ein Pressorgan 277, insbesondere einander gegenüberliegende Pressorgane 277, und/oder eine Erhitzungseinrichtung 278 mit Erhitzungskörpern 279, um das Rollenmaterial 190 des Abschnitts 192 in eine langgestreckte Gestalt zu bringen, wie sie in Figur 20 dargestellt ist. Mithin wird also das Rollenmaterial 190 durch die Glättungseinrichtung 276 in eine geradlinig lang gestreckte Form gebracht.

An die Glättungseinrichtung 276 schließt sich eine Schneideinrichtung 280 an, mit der vom Abschnitt 192 jeweils eine Länge abgelängt wird, die einer gewünschten Nutabdeckung 180 entspricht, also beispielsweise der Länge des Blechpakets 81 oder des Trägerkörpers 90. Die Schneideinrichtung 280 weist beispielsweise Schneidorgane 281, insbesondere Messer, Klingen, Sägeorgane oder dergleichen auf.

An dieser Stelle sei erwähnt, dass anstelle des Blechpakets 181 bzw. Stators 80 andere, d.h. kürzere oder längere Statoren anhand der Montageeinrichtung 270 mit Nutabdeckungen versehen werden können. Bedarfsweise werden also jeweils geeignete Nutabdeckungen 180 hergestellt, deren Länge auf die Länge des zu bestückenden Stators angepasst ist. Das Schneidorgan 280, beispielsweise ein Schneidmesser, schneidet also vom Abschnitt 192 jeweils eine Nutabdeckung 180 ab, die sodann von einem Halteorgan 271 ergriffen und in den Stator 80 eingesetzt wird.

Das Halteorgan 271, beispielsweise ein Greifer, umfasst Haltearme 272, die den Profilkörper 181 bzw. die Nutabdeckung 180 an ihren Längsendbereichen 183 ergreifen und in die Nut 89 anhand der Steckbewegung SB einsetzen können. Ohne weiteres wäre es möglich, dass das Halteorgan 271 eine Saugeinrichtung oder dergleichen Halteelement aufweist, welches die Nutabdeckung 180 im Bereich des Bodens 187 ansaugt und mit einer die Steckbewegung SB erzeugenden Kraftkomponente in die Nut 89 einsteckt.

Man erkennt also, dass durch Stecken, Fügen, Pressen und dergleichen wesentliche Komponenten des Motors 20, 120 herzustellen sind, nämlich beispielsweise die Anschlusseinrichtungen 100, die Abdeckung der Nuten 89 anhand der Nutabdeckungen 180.

Auch die nachfolgend beschriebene Magnetisierung der Magneten 51 folgt diesem Montagekonzept.

Die Magnete 51 sind nämlich bei der Montage am Rotor 40, 140 bzw. Blechpaket 41, 141 zunächst noch nicht magnetisiert. Ein magnetisierbares Material 51A eines jeweiligen Magnetkörpers 56 ist also zunächst nicht magnetisch, wenn der an sich noch nicht magnetische Magnetkörper 52 im Rahmen eines Steckvorgangs oder Pressvorgangs in eine der Halteaufnahmen 45 eingesteckt oder eingepresst wird. Das magnetisierbare Material 51A ist beispielsweise Neodym-Eisen-Bor (NdFeB), vorteilhaft mit einem Zusatz von Dysprosium, oder Samarium-Cobalt (SmCo).

An den Halteaufnahmen 45 sind beispielsweise Stützvorsprünge 48 vorgesehen, die Schmalseiten 54 eines jeweiligen Magnetkörpers 52 abstützen. Die Schmalseiten 54 verlaufen im am Rotor 40, 140 montierten Zustand der Magnete 50 parallel zur Drehachse D. Vorzugsweise sind die Magnetkörper 52 oder Magnete 51 zwischen die Stützvorsprünge 48 geklemmt.

Zwischen den Schmalseiten 54 erstrecken gegenüber den Schmalseiten 54 großflächigere Flachseiten 53. Normalenrichtungen der Flachseiten 53 sind vorzugsweise radial zur Drehachse D.

Die Blechpakete 41, 141 weisen Haltevorsprünge 49 zum Halten der Magnetkörper 52 auf. Die Haltevorsprünge 49 stehen beispielsweise zu den Flachseiten 53 vor und liegen mit ihren freien Endbereichen an den Flachseiten 53 an. Bevorzugt ist es, wenn sich die Haltevorsprünge 49 mit dem Magnetkörper 52 sozusagen verkrallen und/oder Widerlagervorsprünge bilden.

Die Bleche 43 der Blechpakete 41, 141 umfassen Bleche 43, die in einer vorbestimmten Winkelposition bezüglich der Drehachse D Aussparungen 59A aufweisen. Die Aussparungen 59A erstrecken sich vorzugsweise radial bezüglich der Drehachse D von einer der Flachseiten der jeweiligen Halteaufnahme 45 weg, beispielsweise nach radial innen zur Drehachse D hin. Bevorzugt ist es, wenn die Aussparungen 59 A parallel zur Drehachse D in einer Achslinie hintereinander angeordnet sind, also miteinander fluchten. Manche der Bleche 43 haben in die Aussparungen vorstehende Haltevorsprünge 59. Die Haltevorsprünge 59 stehen weiterhin in den Steckquerschnitt einer jeweiligen Halteaufnahme 45 vor, sodass sie beim Einstecken eines Magnetkörpers 52 in eine Halteaufnahme 45 in Eingriff mit dem Magnetkörper 52 gelangen und durch den Magnetkörper 52 in einer Steckrichtung SR, in der der Magnetkörper 52 in die Halteaufnahme 45 eingesteckt wird, umgebogen werden. Dabei kann ein Haltevorsprung 59 in die Aussparung 59A eines oder mehrerer benachbarter Bleche 43 hinein verdrängt werden. Eine Stirnseite eines jeweiligen Haltevorsprungs 59, die die Breite einer Schmalseite eines Bleche 43 aufweist, stützt sich dann schräg geneigt an der Flachseite 53 des Magnetkörpers 52 ab und verhindert ein Herausziehen des Magnetkörpers 52 aus der Halteaufnahme 45 entgegen der Steckrichtung SR.

Vorzugsweise sind die Magnetkörper 52 oder Magnete 51 im Klemmsitz in der Halteaufnahme 45 aufgenommen. Selbstverständlich wäre ein Verkleben, Verschweißen oder dergleichen andere Montage durchaus möglich. Das magnetisierbare Material 51A ist also in das jeweilige Blechpaket 41, 141 im noch nicht magnetisierten Zustand eingesteckt.

Sodann wird der Rotor 40, 140 anhand einer Wuchteinrichtung 285 gewuchtet. Dabei ist die Motorwelle 30, 130 und gegebenenfalls die Isolationshülse 60 bereits montiert. Mithin kann also der Rotor 40, 140 anhand der Motorwelle 30, 130 um seine Drehachse D anhand eines Motors 286 gedreht werden. Eine Messeinrichtung 287 stellt beispielsweise Unwuchten des Rotors 40, 140 fest.

Dann werden noch vorhandene Unwuchten beseitigt, indem beispielsweise anhand einer materialreduzierenden Einrichtung 288, beispielsweise einer Schleifeinrichtung, einer Fräseinrichtung oder dergleichen, mindestens eine Wuchtpartie 55 hergestellt werden. Dabei wird beispielsweise dort, wo eine Wuchtung notwendig ist, Material des Blechpakets 41, 141 abgetragen, wobei Späne, Metallstaub oder dergleichen entstehen. Das ist aber unproblematisch, da die Magnetkörper 52 noch nicht magnetisiert sind, wenn das Material des Blechpakets 41, 141 bearbeitet wird. Die Späne, Stäube oder dergleichen, die durch Abtrag der Bleche 43 entstehen, haften nicht magnetisch am Blechpaket 41, 141 an, so dass sie leicht entfernbar sind. Beim späteren Betrieb des Antriebsmotors 20, 120 sind dann also keine Metallspäne oder Stäube vorhanden, die beispielsweise die Lager 24 oder 25 beschädigen können.

Vorteilhaft ist es, wenn die Wuchtpartien 55 an denjenigen Bereichen des Blechpakets 41, 141 angebracht werden, wo das Blechpaket 41, 141 in radialer Richtung bezüglich der Drehachse D eine möglichst große Materialstärke oder Dicke aufweist, also insbesondere radial außen bezüglich der Magnete 51. Wenn also beispielsweise eine Unwucht U an einem zur Herstellung einer Wuchtpartie ungünstigen Bereich auftritt, ist ein vektorielles Wuchten bevorzugt, bei dem die Unwucht U in Kraftvektoren Ux und Uy zerlegt ist und diesen entsprechend durch die materialreduzierende Einrichtung 288 beispielsweise Wuchtpartien 55x und 55y radial außen am Blechpaket 41, 141 hergestellt werden. Die Wuchtpartien 55x und 55y befinden sich beispielsweise radial außen am Blechpaket 41, 141 von Halteaufnahmen 55, die in einem Winkelabstand zu Unwucht U unmittelbar neben derselben angeordnet sind.

Bei dem Rotor 40, 140 sind an den Stirnseiten 44 keine Wuchtkörper oder Wuchtgewichte notwendig. Dadurch sind beispielsweise die Einströmöffnungen und Ausströmöffnungen der Luftkanäle 46 nicht durch Wuchtgewichte oder Wuchtkörper verdeckt. Weiterhin kann Luft auch seitlich an den Magneten 51 vorbeiströmen, nämlich durch Luftkanäle 46A, die an den Halteaufnahmen 45 vorgesehen oder durch die Halteaufnahmen 45 bereitgestellt werden. Auch die Einströmöffnungen und Ausströmöffnungen der Luftkanäle 46A sind nicht durch Wuchtkörper oder Wuchtgewichte verdeckt

Eine Reinigungseinrichtung 289, beispielsweise eine Blaseinrichtung, eine Bürsteneinrichtung und/oder ein Staubsauger oder dergleichen, kann die beim Materialabtrag durch die materialreduzierende Einrichtung 288 entstehende metallische Partikel ohne weiteres vom Rotor 40, 140, insbesondere dem jeweiligen Blechpaket 41, 141 entfernen, solange die Magnetkörper 52 nicht magnetisch sind. Beispielsweise erzeugt die Reinigungseinrichtung 289 einen Luftstrahl LU, der Späne und dergleichen aus dem Bereich der Wuchtpartie 55 entfernt.

Wenn der Rotor 40, 140 gewuchtet ist, wird er anhand einer Magnetisierungseinrichtung 290 magnetisiert, d.h. insbesondere werden die Magnetkörper 52 magnetisch aktiviert. Die Magnetisierungseinrichtung 290 weist beispielsweise Magnetisierungsköpfe 291A, 291B, 291C, 291D auf.

Beispielsweise umfasst die Magnetisierungseinrichtung 290 eine Positioniereinrichtung 292, die die Motorwelle 30, 130 derart positioniert, insbesondere verdreht, dass die Magnete 51 den Magnetisierungsköpfen 291 winkelrichtig exakt gegenüberliegen.

Vorteilhaft wird der Rotor 40, 140 anhand einer mechanischen Kodierung 57 derart bezüglich der Magnetisierungsköpfe 291A, 291B, 291C, 291D positioniert, dass je ein Magnetisierungskopf 291A, 291B, 291C, 291D zwischen benachbarten Magneten 51 angeordnet ist.

Beispielsweise dient die Verdrehsicherungskontur 74 als die Kodierung 57, die beispielsweise an einem Anschlag 293, insbesondere einem Drehanschlag, der Magnetisierungseinrichtung 290 anschlägt, so dass der Rotor 40, 140 drehwinkelrichtig bezüglich der Magnetisierungsköpfe 291 angeordnet ist. Der Anschlag 293 ist im Zusammenhang mit der Wuchteinrichtung 285 dargestellt. Ohne weiteres können aber auch andere Komponenten des Rotors 40 als Kodierung 57 dienen, beispielsweise die Luftkanäle 46, in die entsprechende Anschläge der Magnetisierungseinrichtung 290 eingreifen können und/oder die optisch erfassbar sind. Vorteilhaft ist auch eine optische Erfassung der Drehwinkellage des Rotors 40, 140 möglich, z.B. durch eine Kamera oder dergleichen anderen optischen Sensor der Magnetisierungseinrichtung 290.

Die Magnetisierungsköpfe 291A, 291B, 291C, 291D erzeugen magnetische Felder MFA, MFB, MFC, MFD, welche die in einem Winkelabstand bezüglich der Drehachse D nebeneinander angeordneten Magnetkörper 52 oder Magnete 51 durchdringen, so dass diese dauerhaft magnetisiert werden und magnetische Pole ausbilden, die als Nordpole N und Südpole S angedeutet sind. Die magnetischen Felder MFA, MFB, MFC, MFD sind in gestrichelten Feldlinien mit Pfeilen entsprechend ihrer magnetischen Flussrichtung in der Zeichnung angedeutet.

Wenn die Magnete 51 der Rotoren 40, 140 magnetisiert sind, werden die Rotoren 40, 140 am Stator 80 montiert.

Es versteht sich, dass in den Halteaufnahmen 45 für die Magnete 51 auch mehrere Magnetkörper 52 oder Magnete 51 anordenbar sind, beispielsweise parallel zur Drehachse D eine Reihenanordnung von zwei oder mehreren Magnetkörpern 52 oder Magneten 51. Auch in diesem Fall ist eine Magnetisierung der jeweiligen Magnetkörper 52 ohne weiteres möglich, wenn sie bereits in den Halteaufnahmen 45 aufgenommen sind.

Bei der Magnetisierung durch die Magnetisierungseinrichtung 290 ist auch vorteilhaft, dass die Bleche 43 der Blechpakete 41, 141 magnetisch leitend sind, so dass sie die magnetischen Felder 292 der Magnetisierungseinrichtung 290 optimal durch die Magnetkörper 52 durchleiten können.

## Patentansprüche

1. Antriebsmotor für ein Sauggerät (400) oder eine Werkzeugmaschine in Gestalt einer Hand-Werkzeugmaschine (200, 300) oder einer halbstationären Werkzeugmaschine, wobei der Antriebsmotor (20, 120) einen Stator (80) mit einer Erregerspulenanordnung (86) und einen Rotor (40, 140) mit einer Motorwelle (30, 130) aufweist, die an dem Stator oder bezüglich des Stators (80) anhand einer Lageranordnung (24A) um eine Drehachse (D) drehbar gelagert ist und eine Wellendurchtrittsöffnung (42, 142) eines Blechpakets (41, 141) durchsetzt, das an der Motorwelle (30, 130) gehalten ist und von der Motorwelle (30, 130) elektrisch isoliert ist, und wobei zwischen der Motorwelle (30, 130) und dem Blechpaket (41, 141) eine Isolationshülse (60) angeordnet ist, die in die Wellendurchtrittsöffnung (42, 142) eingesteckt ist und eine Steckaufnahme (64) mit einer Einstecköffnung (64A) aufweist, durch die die Motorwelle (30, 130) in die Steckaufnahme entlang einer Steckachse (S) eingesteckt ist, **dadurch gekennzeichnet, dass** mindestens ein Widerlagervorsprung (43A) von dem Blechpaket (41, 141) in die Wellendurchtrittsöffnung (42, 142) vorsteht, welcher in die Isolationshülse (60) eindringt und/oder eingreift.

2. Antriebsmotor nach Anspruch 1, **dadurch gekennzeichnet, dass** sich die Isolationshülse (60) sich über eine vollständige Länge des Blechpakets (41, 141) bezüglich der Steckachse (S) erstreckt und/oder das Blechpaket (41, 141) ausschließlich anhand der Isolationshülse (60) elektrisch von der Motorwelle (30, 130) isoliert ist und/oder dass die Motorwelle (30, 130) vor die Einstecköffnung (64A) der Isolationshülse (60) und/oder vor eine Austrittsöffnung (64B) der Steckaufnahme (64) vorsteht, die an einem zu der Einstecköffnung (64A) entgegengesetzten Längsendbereich der Isolationshülse (60) vorgesehen ist.

3. Antriebsmotor nach Anspruch 1 oder 2, **dadurch gekennzeichnet, dass** die Isolationshülse (60) mindestens Längsanschlag zum Anschlagen an dem Blechpaket (41, 141) bezüglich der Steckachse (S) aufweist und/oder dass die Isolationshülse (60) einen vor einen Rohrabschnitt (63) der Isolationshülse (60) vorstehenden Flanschkörper (68) zur Abstützung an dem Blechpaket (41, 141) bezüglich der Steckachse (S) aufweist und/oder dass die Isolationshülse (60) zwischen dem Blechpaket (41, 141) und der Motorwelle (30, 130) in einer Kraftrichtung radial zu der Drehachse (D) und/oder einer Kraftrichtung parallel zu der Drehachse (D) verspannt ist und/oder dass die Isolationshülse (60) durch die Motorwelle (30, 130) nach radial außen bezüglich der Drehachse (D) mit dem Blechpaket (41, 141) verspannt ist.

4. Antriebsmotor nach einem der vorhergehenden Ansprüche, **dadurch gekennzeichnet, dass** an der Isolationshülse (60) mindestens eine Formschlusspartie (75) ausgebildet ist, an der die Isolationshülse (60) durch die in die Steckaufnahme (64) eingesteckte Motorwelle (30, 130) bezüglich der Drehachse (D) nach radial außen in einen formschlüssigen Eingriff mit dem Blechpaket (41, 141) verdrängt ist, wobei vorteilhaft vorgesehen ist, dass die mindestens eine Formschlusspartie (75) eine Stufe (67) umfasst, an der eine Stirnseite (44) des Blechpakets (41, 141) abgestützt ist, und/oder eine Formschlussaufnahme (75B) umfasst, in die ein in die Wellendurchtrittsöffnung (42, 142) vorstehender Widerlagervorsprung (43A) eingreift.

5. Antriebsmotor nach einem der vorhergehenden Ansprüche, **dadurch gekennzeichnet, dass** die Steckaufnahme (64) einen ersten Innenquerschnitt (W1), der einem der Einstecköffnung (64A) zugewandten Längsendbereich (61) des Blechpakets (41, 141) zugeordnet ist, und einen zweiten Innenquerschnitt (W2) aufweist, der einem von der Einstecköffnung (64A) abgewandten Längsendbereich (62) des Blechpakets (41, 141) zugeordnet ist, und im vollständig in der Steckaufnahme (64) eingesteckten Zustand der Motorwelle (30, 130) ein Abschnitt der Motorwelle (30, 130) mit einem ersten Außenquerschnitt (AQ1) an der Steckaufnahme (64) im Bereich des ersten Innenquerschnitts (W1) und ein Abschnitt der Motorwelle (30, 130) mit einem zweiten Außenquerschnitt (AQ2) an der Steckaufnahme (64) im Bereich des zweiten Innenquerschnitts (W2) anliegt, wobei der erste Innenquerschnitt (W1) der Steckaufnahme (64) größer als der zweite Innenquerschnitt (W1) und/oder der erste Außenquerschnitt (AQ1) der Motorwelle (30, 130) kleiner als der zweite Außenquerschnitt (AQ2) ist.

6. Antriebsmotor nach Anspruch 5, **dadurch gekennzeichnet, dass** der zweite Innenquerschnitt (WQ2) der Steckaufnahme (64) durch den in ihn eingesteckten zweiten Außenquerschnitt (AQ2) der Motorwelle (30, 130) vergrößert oder aufgeweitet ist und/oder dass der Innenquerschnitt der Steckaufnahme (64) von dem ersten Innenquerschnitt (WQ1) zu dem zweiten Innenquerschnitt (WQ2), insbesondere konisch oder in der Art eines Steckkonus', kontinuierlich abnimmt und/oder der Außenquerschnitt der Motorwelle (30, 130) von dem erste Außenquerschnitt (AQ1) zu dem zweiten Außenquerschnitt (AQ2) kontinuierlich zunimmt.

7. Antriebsmotor nach einem der vorhergehenden Ansprüche, **dadurch gekennzeichnet, dass** die Wellendurchtrittsöffnung (42, 142) des Blechpakets (41, 141) an einem zum Einstecken der Isolationshülse (60) vorgesehenen Längsendbereich (41A) einen größeren Innenquerschnitt aufweist als an einem zu diesem Längsendbereich entgegengesetzten Längsendbereich (41B) und/oder dass die Isolationshülse (60) und das Blechpaket (41, 141) anhand von Verdrehsicherungskonturen (47, 74) verdrehsicher bezüglich der Drehachse (D) und/oder der Steckachse (S) formschlüssig in Eingriff miteinander sind und/oder dass die Verdrehsicherungskonturen (47, 74) mindestens einen Verdrehsicherungsvorsprung (74A) zum Eingriff in mindestens eine Verdrehsicherungsaufnahme (47A), die sich insbesondere radial bezüglich der Steckachse (S) und/oder Drehachse (D) erstrecken, und/oder mindestens eine Längsrippe (74B) und mindestens eine Längsnut (47B) umfassen, parallel zur Steckachse (S) und/oder Drehachse (D) verlaufen.

8. Antriebsmotor nach einem der vorhergehenden Ansprüche, **dadurch gekennzeichnet, dass** ein in der Wellendurchtrittsöffnung (42, 142) aufgenommener Rohrabschnitt (63) der Isolationshülse (60) eine Wandstärke von mindestens 2 mm aufweist.

9. Antriebsmotor nach einem der vorhergehenden Ansprüche, **dadurch gekennzeichnet, dass** die Isolationshülse (60) mindestens einen vor eine Stirnseite des Blechpakets (41, 141) vorstehenden Isolationsabschnitt (76) aufweist.

10. Antriebsmotor nach Anspruch 9, **dadurch gekennzeichnet, dass** durch den Isolationsabschnitt (76) ein Isolationsabstand von mindestens 5 mm, vorzugsweise mindestens 7 mm, insbesondere mindestens 8 mm, zwischen dem Blechpaket (41, 141) und der Motorwelle (30, 130) gebildet ist und/oder dass der Isolationsabschnitt (76) einen Rohrabschnitt (63) umfasst oder durch einen Rohrabschnitt (63) gebildet ist, der nicht nach radial außen bezüglich der Drehachse (D) vor einen in der Wellendurchtrittsöffnung (42, 142) des Blechpakets (41, 141) aufgenommenen Abschnitt der Isolationshülse (60) vorsteht, der bezüglich der Steckachse (S) neben dem Isolationsabschnitt (76) angeordnet ist, und/oder dass der Isolationsabschnitt (76) einen insbesondere ringförmigen Flanschkörper (68) umfasst, der nach radial außen vor einen in dem Blechpaket (41, 141) aufgenommenen Rohrabschnitt (63) der Isolationshülse (60) bezüglich der Drehachse (D) vorsteht.

11. Antriebsmotor nach einem der vorhergehenden Ansprüche, **dadurch gekennzeichnet, dass** die Isolationshülse (60) in einem Zustand unterhalb einer Betriebstemperatur des Antriebsmotors und/oder mit einer Temperatur unterhalb von 40 °C in die Wellendurchtrittsöffnung (42, 142) eingesteckt ist.

12. Antriebsmotor nach einem der vorhergehenden Ansprüche, **dadurch gekennzeichnet, dass** die Isolationshülse (60) aus insbesondere glasfaserverstärktem Kunststoff, insbesondere Polyamid, vorzugsweise Pa6/66 Gf30, besteht und/oder die Isolationshülse (60) eine feste Struktur bis zu einer Temperatur von mindestens 120° beibehält.

13. Antriebsmotor nach einem der vorhergehenden Ansprüche, **dadurch gekennzeichnet, dass** die Isolationshülse (60) und die Motorwelle (30, 130) anhand von Formschlusskonturen (36B, 136B), insbesondere parallel und/oder verdrehsicher bezüglich einer Längsachse (L) und/oder der Steckachse (S), in Eingriff miteinander sind, wobei vorteilhaft vorgesehen ist, dass die Formschlusskonturen (36B, 136B) eine Formschlusskonturierung (36, 136) am Außenumfang der Motorwelle (30, 130) umfassen oder dadurch gebildet sind.

14. System umfassend einen ersten Antriebsmotor (120) und einen Antriebsmotor nach einem der vorhergehenden Ansprüche als einen zweiten Antriebsmotor (20), wobei die Antriebsmotoren (20, 120) für ein Sauggerät (400) oder eine Werkzeugmaschine in Gestalt einer Hand-Werkzeugmaschine (200, 300) oder einer halbstationären Werkzeugmaschine vorgesehen sind oder Bestandteile des Sauggeräts (400) oder der Werkzeugmaschine bilden, wobei die Antriebsmotoren (20, 120) jeweils einen Stator (80) mit einer Erregerspulenanordnung (86) und einen Rotor (40, 140) mit einer Motorwelle (30, 130) aufweisen, die an dem Stator oder bezüglich des Stators (80) anhand einer Lageranordnung (24A) um eine Drehachse (D) drehbar gelagert ist und eine Wellendurchtrittsöffnung (42, 142) eines Blechpakets (41, 141) durchsetzt, das an einem Halteabschnitt (33) der jeweiligen Motorwelle (30, 130) gehalten ist, **dadurch gekennzeichnet, dass** die Halteabschnitte (33) der Motorwellen (30, 130) der Antriebsmotoren (20, 120) im Bereich der Blechpakete (41, 141) identische Außenumfangsgeometrien aufweisen, wobei das Blechpaket (141) des ersten Antriebsmotors (120) unmittelbar am Außenumfang des Halteabschnitts (33) der das Blechpaket (141) tragenden Motorwelle (30, 130) abgestützt ist und das Blechpaket (41) des zweiten Antriebsmotors (20) über die Isolationshülse (60) als einen elektrisch isolierenden Isolationskörper (60A) am Halteabschnitt (33) der das Blechpaket (41) tragenden Motorwelle (30, 130) abgestützt ist.

15. Verfahren zur Herstellung eines Antriebsmotors für ein Sauggerät (400) oder eine Werkzeugmaschine in Gestalt einer Hand-Werkzeugmaschine (200, 300) oder einer halbstationären Werkzeugmaschine, wobei der Antriebsmotor (20, 120) einen Stator (80) mit einer Erregerspulenanordnung (86) und einen Rotor (40, 140) mit einer Motorwelle (30, 130) aufweist, die an dem Stator oder bezüglich des Stators (80) anhand einer Lageranordnung (24A) um eine Drehachse (D) drehbar gelagert ist und eine Wellendurchtrittsöffnung (42, 142) eines Blechpakets (41, 141) durchsetzt, das an der Motorwelle (30, 130) gehalten ist und von der Motorwelle (30, 130) elektrisch isoliert ist, umfassend:
- Einstecken einer Isolationshülse (60) in die Wellendurchtrittsöffnung (42, 142), , und
- Einstecken der Motorwelle (30, 130) in eine Steckaufnahme (64) der Isolationshülse (60) durch eine Einstecköffnung (64A) der Steckaufnahme (64), so dass die Isolationshülse (60) zwischen der Motorwelle (30, 130) und dem Blechpaket (41, 141) angeordnet ist,
**dadurch gekennzeichnet, dass** mindestens ein Widerlagervorsprung (43A) von dem Blechpaket (41, 141) in die Wellendurchtrittsöffnung (42, 142) vorsteht, welcher in die Isolationshülse (60) eindringt und/oder eingreift.

## Claims

1. A drive motor for a suction device (400) or a machine tool in the form of a handheld machine tool (200, 300) or a semi-stationary machine tool, the drive motor (20, 120) having a stator (80) with an excitation coil assembly (86) and a rotor (40, 140) with a motor shaft (30, 130), which is rotatably mounted by means of a bearing assembly (24A), on the stator or with respect to the stator (80), around a rotational axis (D), and which passes through a shaft through-opening (42, 142) of a laminated core (41, 141) that is held on the motor shaft (30, 130) and is electrically insulated from the motor shaft (30, 130), and wherein an insulation sleeve (60) is arranged between the motor shaft (30, 130) and the laminated core (41, 141), said sleeve plugged into the shaft passage (42, 142) and having a socket (64) with an insertion opening (64A), through which the motor shaft (30, 130) is plugged into the plug socket along a insertion axis (S), **characterized in that** at least one buttress projection (43A) protrudes from the laminated core (41, 141) into the shaft through-opening (42, 142) and which penetrates and/or engages in the insulation sleeve (60).

2. The drive motor as claimed in claim 1, **characterized in that** the insulation sleeve (60) extends over an entire length of the laminated core (41, 141) with respect to the insertion axis (S) and/or the laminated core (41, 141) is electrically insulated from the motor shaft (30, 130) exclusively by means of the insulation sleeve (60) and/or **in that** the motor shaft (30, 130) protrudes in front of the insertion opening (64A) of the insulation sleeve (60) and/or in front of an outlet opening (64B) of the socket (64) which is provided at a longitudinal end region of the insulating sleeve (60) opposite to the insertion opening (64A).

3. The drive motor as claimed in claim 1 or 2, **characterized in that** the insulation sleeve (60) has at least a longitudinal stop for striking the laminated core (41, 141) with respect to the insertion axis (S) and/or **in that** the insulation sleeve (60) has a flange body (68) protruding in front of a tube portion (63) of the insulation sleeve (60) for support on the laminated core (41, 141) with respect to the quick-release axle (S) and/or **in that** the insulation sleeve (60) is tensioned between the laminated core (41, 141) and the motor shaft (30, 130) in a force direction radial to the rotational axis (D) and/or a force direction parallel to the rotational axis (D) and/or **in that** the insulation sleeve (60) is tensioned with the laminated core (41, 141) radially outward with respect to the rotational axis (D) by the motor shaft (30, 130).

4. The drive motor as claimed in any one of the preceding claims, **characterized in that** at least one form-fitting section (75) is formed on the insulation sleeve (60), on which the insulation sleeve (60) is displaced radially outward with respect to the rotational axis (D) into formfitting engagement with the laminated core (41, 141) by the motor shaft (30, 130) which is plugged into the socket (64), wherein it is advantageously provided that the at least one formfitting section (75) comprises a step (67) on which an end side (44) of the laminated core (41, 141) is supported, and/or a formfitting receptacle (75B), in which a buttress projection (43A) protruding into the shaft through-opening (42, 142) engages.

5. The drive motor as claimed in any one of the preceding claims, **characterized in that** the socket (64) has a first inner cross section (W1) which is associated with a longitudinal end region (61) of the laminated core (41, 141) facing the insertion opening (64A), and has a second inner cross section (W2), which is associated with a longitudinal end region (62) of the laminated core (41, 141) facing away from the insertion opening (64A), and in a state of the motor shaft (30, 130) in which the shaft is fully plugged in the socket (64), a portion of the motor shaft (30, 130) with a first outer cross section (AQ1) presses against the socket (64) in the region of the first inner cross section (W1) and a portion of the motor shaft (30, 130) with a second outer cross section (AQ2) presses against the socket (64) in the region of the second inner cross section (W2), the first inner cross section (W1) of the socket (64) being larger than the second inner cross section (W1) and/or the first outer cross section (AQ1) of the motor shaft (30, 130) being smaller than the second outer cross section (AQ2).

6. The drive motor as claimed in claim 5, **characterized in that** the second inner cross section (WQ2) of the socket (64) is enlarged or widened by the second outer cross section (AQ2) of the motor shaft (30, 130) inserted into it and/or **in that** the inner cross section of the socket (64) continuously decreases from the first inner cross section (WQ1) to the second inner cross section (WQ2), in particular conical or in the manner of an insertion cone, and/or the outer cross section of the motor shaft (30, 130) increases continuously from the first outer cross section (AQ1) to the second outer cross section (AQ2).

7. The drive motor as claimed in any one of the preceding claims, **characterized in that** the shaft through-opening (42, 142) of the laminated core (41, 141) on a longitudinal end region (41A) provided for insertion of the insulation sleeve (60) has a larger inner cross section than at a longitudinal end region (41B) opposite this longitudinal end region and/or **in that** the insulation sleeve (60) and the laminated core (41, 141) are engaged in a formfitting manner by means of twist-lock contours (47, 74) in a twist-locked manner with respect to the rotational axis (D) and/or the insertion axis (S) and/or **in that** the twist-lock contours (47, 74) comprise at least one twist-lock projection (74A) for engaging in at least one twist-lock receptacle (47A), which in particular extend radially with respect to the insertion axis (S) and/or rotation axis (D), and/or comprise at least one longitudinal rib (74B) and at least one longitudinal groove (47B) running parallel to the insertion axis (S) and/or the rotational axis (D).

8. The drive motor as claimed in any one of the preceding claims, **characterized in that** a tube portion (63) of the insulation sleeve (60) received in the shaft through-opening (42, 142) has a wall thickness of at least 2 mm.

9. The drive motor as claimed in any one of the preceding claims, **characterized in that** the insulation sleeve (60) has at least one insulation portion (76) protruding in front of an end side of the laminated core (41, 141).

10. The drive motor as claimed in claim 9, **characterized in that** an insulation distance of at least 5 mm, preferably at least 7 mm, in particular at least 8 mm, is formed between the laminated core (41, 141) and the motor shaft (30, 130) by the insulation portion (76) and/or **in that** the insulation portion (76) comprises a tube portion (63) or is formed by a tube portion (63) which does not protrude radially outward with respect to the rotational axis (D) in front of a portion of the insulation sleeve (60) received in the shaft through-opening (42, 142) of the laminated core (41, 141), which is arranged next to the insulation portion (76) with respect to the insertion axis (S), and/or **in that** the insulation portion (76) comprises an in particular ring-shaped flange body (68) which protrudes radially outward in front of a tube portion (63) of the insulation sleeve (60) received in the laminated core (41, 141) with respect to the rotational axis (D).

11. The drive motor as claimed in any one of the preceding claims, **characterized in that** the insulation sleeve (60) is inserted in the shaft through-opening (42, 142) in a state below an operating temperature of the drive motor and/or at a temperature below 40 °C.

12. The drive motor as claimed in any one of the preceding claims, **characterized in that** the insulation sleeve (60) consists of, in particular, glass fiber reinforced plastic, in particular polyamide, preferably Pa6/66 Gf30, and/or the insulation sleeve (60) maintains a solid structure up to a temperature of at least 120°.

13. The drive motor as claimed in any one of the preceding claims, **characterized in that** the insulation sleeve (60) and the motor shaft (30, 130), by means of formfitting contours (36B, 136B), are engaged with one another in particular parallel and/or twist-locked with respect to a longitudinal axis (L) and/or the insertion axis (S), wherein it is advantageously provided **in that** the formfitting contours (36B, 136B) comprise or are formed by a formfitting contour (36, 136) on the outer circumference of the motor shaft (30, 130).

14. A system comprising a first drive motor (120) and a drive motor as claimed in any one of the preceding claims as a second drive motor (20), wherein the drive motors (20, 120) are provided for a suction device (400) or a machine tool in the form of a handheld machine tool (200, 300) or a semi-stationary machine tool or form components of the suction device (400) or the machine tool, the drive motor (20, 120) having a stator (80) with an excitation coil assembly (86) and a rotor (40, 140) with a motor shaft (30, 130), which is rotatably mounted by means of a bearing assembly (24A), on the stator or with respect to the stator (80), around a rotational axis (D), and which passes through a shaft through-opening (42, 142) of a laminated core (41, 141) that is held at a holding portion (33) of the respective motor shaft (30, 130), **characterized in that** the holding portions (33) of the motor shafts (30, 130) of the drive motors (20, 120) in the region of the laminated cores (41, 141) have identical outer circumferential geometries, with the laminated core (141) of the first drive motor (120) being supported directly on the outer circumference of the holding portion (33) of the motor shaft (30, 130) supporting the laminated core (141), and the laminated core (41) of the second drive motor (20) being supported via the insulation sleeve (60) as an electrically insulating insulation body (60A) on the holding portion (33) of the motor shaft (30, 130) supporting the laminated core (41).

15. A method for producing a drive motor for a suction device (400) or a machine tool in the form of a handheld machine tool (200, 300) or a semi-stationary machine tool, the drive motor (20, 120) having a stator (80) with an excitation coil assembly (86) and a rotor (40, 140) with a motor shaft (30, 130), which is rotatably mounted by means of a bearing assembly (24A), on the stator or with respect to the stator (80), around a rotational axis (D), and which passes through a shaft through-opening (42, 142) of a laminated core (41, 141) that is held on the motor shaft (30, 130) and is electrically insulated from the motor shaft (30, 130), comprising:
- plugging in an insulation sleeve (60) in the shaft through-opening (42, 142), and
- plugging in the motor shaft (30, 130) in a socket (64) of the insulation sleeve (60) through an insertion opening (64A) of the socket (64), so that the insulation sleeve (60) is arranged between the motor shaft (30, 130) and the laminated core (41, 141),
**characterized in that** at least one buttress projection (43A) protrudes from the laminated core (41, 141) into the shaft through-opening (42, 142) and which penetrates and/or engages in the insulation sleeve (60).

## Revendications

1. Moteur d'entraînement pour un appareil d'aspiration (400) ou une machine-outil sous la forme d'une machine-outil manuelle (200, 300) ou d'une machine-outil semi-stationnaire, dans lequel le moteur d'entraînement (20, 120) présente un stator (80) avec un ensemble de bobines d'excitation (86) et un rotor (40, 140) avec un arbre de moteur (30, 130), qui est monté sur le stator ou par rapport au stator (80) de manière à pouvoir tourner autour d'un axe de rotation (D) à l'aide d'un ensemble de paliers (24A) et qui traverse une ouverture de passage d'arbre (42, 142) d'un empilage de tôles (41, 141), qui est maintenu sur l'arbre de moteur (30, 130) et est isolé électriquement de l'arbre de moteur (30, 130), et dans lequel est disposé entre l'arbre de moteur (30, 130) et l'empilage de tôles (41, 141), un manchon isolant (60), qui est enfiché dans l'ouverture de passage d'arbre (42, 142) et présente un logement d'enfichage (64) avec une ouverture d'enfichage (64A), par laquelle l'arbre de moteur (30, 130) est enfiché dans le logement d'enfichage le long d'un axe d'enfichage (S), **caractérisé en ce qu'**au moins une partie faisant saillie de palier de butée (43A) fait saillie de l'empilage de tôles (41, 141) dans l'ouverture de passage d'arbre (42, 142), laquelle pénètre dans le manchon isolant (60) et/ou vient en prise avec celui-ci.

2. Moteur d'entraînement selon la revendication 1, **caractérisé en ce que** le manchon isolant (60) s'étend sur la totalité d'une longueur de l'empilage de tôles (41, 141) par rapport à l'axe d'enfichage (S) et/ou l'empilage de tôles (41, 141) est isolé électriquement de l'arbre de moteur (30, 130) exclusivement à l'aide du manchon isolant (60), et/ou que l'arbre de moteur (30, 130) fait saillie devant l'ouverture d'enfichage (64A) du manchon isolant (60) et/ou devant une ouverture de sortie (64B) du logement d'enfichage (64), qui est prévue sur une zone d'extrémité longitudinale du manchon isolant (60) opposée à l'ouverture d'enfichage (64A).

3. Moteur d'entraînement selon la revendication 1 ou 2, **caractérisé en ce que** le manchon isolant (60) présente au moins une butée longitudinale destinée à venir buter sur l'empilage de tôles (41, 141) par rapport à l'axe d'enfichage (S), et/ou que le manchon isolant (60) présente un corps de bride (68) faisant saillie devant une section tubulaire (63) du manchon isolant (60), destiné à venir en appui sur l'empilage de tôles (41, 141) par rapport à l'axe d'enfichage (S), et/ou que le manchon isolant (60) est assemblé par serrage entre l'empilage de tôles (41, 141) et l'arbre de moteur (30, 130) dans une direction de force de manière radiale à l'axe de rotation (D) et/ou dans une direction de force de manière parallèle à l'axe de rotation (D), et/ou que le manchon isolant (60) est assemblé par serrage à l'empilage de tôles (41, 141) par l'arbre de moteur (30, 130) vers l'extérieur radialement par rapport à l'axe de rotation (D).

4. Moteur d'entraînement selon l'une quelconque des revendications précédentes, **caractérisé en ce qu'**est réalisée sur le manchon isolant (60) au moins une partie à complémentarité de forme (75), sur laquelle le manchon isolant (60) est repoussé avec l'empilage de tôles (41, 141) dans une prise par complémentarité de forme vers l'extérieur radialement par rapport à l'axe de rotation (D) par l'arbre de moteur (30, 130) enfiché dans le logement d'enfichage (64), dans lequel il est prévu avantageusement que l'au moins une partie à complémentarité de forme (75) comprend un palier (67), sur lequel un côté frontal (44) de l'empilage de tôles (41, 141) prend appui, et/ou comprend un logement à complémentarité de forme (75B), avec lequel une partie faisant saillie de palier de butée (43A) faisant saillie dans l'ouverture de passage d'arbre (42, 142) vient en prise.

5. Moteur d'entraînement selon l'une quelconque des revendications précédentes, **caractérisé en ce que** le logement d'enfichage (64) présente une première section transversale intérieure (W1), qui est associée à une zone d'extrémité longitudinale (61), tournée vers l'ouverture d'enfichage (64A), de l'empilage de tôles (41, 141), et une deuxième section transversale intérieure (W2), qui est associée à une zone d'extrémité longitudinale (62), opposée à l'ouverture d'enfichage (64A), de l'empilage de tôles (41, 141), et, dans l'état de l'arbre de moteur (30, 130) totalement enfiché dans le logement d'enfichage (64), une section de l'arbre de moteur (30, 130) repose par une première section transversale extérieure (AQ1) sur le logement d'enfichage (64) dans la zone de la première section transversale intérieure (W1) et une section de l'arbre de moteur (30, 130) repose par une deuxième section transversale extérieure (AQ2) sur le logement d'enfichage (64) dans la zone de la deuxième section transversale intérieure (W2), dans lequel la première section transversale intérieure (W1) du logement d'enfichage (64) est plus grande que la deuxième section transversale intérieure (W1) et/ou la première section transversale extérieure (AQ1) de l'arbre de moteur (30, 130) est inférieure à la deuxième section transversale extérieure (AQ2).

6. Moteur d'entraînement selon la revendication 5, **caractérisé en ce que** la deuxième section transversale intérieure (WQ2) du logement d'enfichage (64) est agrandie ou élargie par la deuxième section transversale extérieure (AQ2) de l'arbre de moteur (30, 130) enfichée dans celle-ci, et/ou que la section transversale intérieure du logement d'enfichage (64) diminue en continu depuis la première section transversale intérieure (WQ1) vers la deuxième section transversale intérieure (WQ2), en particulier de manière conique ou à la manière d'un cône d'enfichage, et/ou la section transversale extérieure de l'arbre de moteur (30, 130) augmente en continu depuis la première section transversale extérieure (AQ1) vers la deuxième section transversale extérieure (AQ2).

7. Moteur d'entraînement selon l'une quelconque des revendications précédentes, **caractérisé en ce que** l'ouverture de passage d'arbre (42, 142) de l'empilage de tôles (41, 141) présente sur une zone d'extrémité longitudinale (41A) prévue pour enficher le manchon isolant (60) une section transversale intérieure plus grande qu'une zone d'extrémité longitudinale (41B) opposée à ladite zone d'extrémité longitudinale, et/ou que le manchon isolant (60) et l'empilage de tôles (41, 141) sont en prise l'un avec l'autre par complémentarité de forme par rapport à l'axe de rotation (D) et/ou à l'axe d'enfichage (S) de manière bloquée en rotation à l'aide de contours de blocage en rotation (47, 74), et/ou que les contours de blocage en rotation (47, 74) comprennent au moins une partie faisant saillie de blocage en rotation (74A) destinée à venir en prise avec au moins un logement de blocage en rotation (47A), lesquels s'étendent en particulier radialement par rapport à l'axe d'enfichage (S) et/ou l'axe de rotation (D), et/ou au moins une nervure longitudinale (74B) et au moins une rainure longitudinale (47B), qui s'étendent de manière parallèle à l'axe d'enfichage (S) et/ou à l'axe de rotation (D).

8. Moteur d'entraînement selon l'une quelconque des revendications précédentes, **caractérisé en ce qu'**une section tubulaire (63), logée dans l'ouverture de passage d'arbre (42, 142), du manchon isolant (60) présente une épaisseur de paroi d'au moins 2 mm.

9. Moteur d'entraînement selon l'une quelconque des revendications précédentes, **caractérisé en ce que** le manchon isolant (60) présente au moins une section isolante (76) faisant saillie devant un côté frontal de l'empilage de tôles (41, 141).

10. Moteur d'entraînement selon la revendication 9, **caractérisé en ce qu'**une distance isolante d'au moins 5 mm, de préférence d'au moins 7 mm, en particulier d'au moins 8 mm, entre l'empilage de tôles (41, 141) et l'arbre de moteur (30, 130) est formée par la section isolante (76), et/ou que la section isolante (76) comprend une section tubulaire (63) ou est formée par une section tubulaire (63), qui ne fait pas saillie vers l'extérieur radialement par rapport à l'axe de rotation (D) devant une section du manchon isolant (60) logée dans l'ouverture de passage d'arbre (42, 142) de l'empilage de tôles (41, 141), laquelle est disposée à côté de la section isolante (76) par rapport à l'axe d'enfichage (S), et/ou que la section isolante (76) comprend un corps de bride (68) en particulier annulaire, qui fait saillie vers l'extérieur radialement devant une section tubulaire (63) du manchon isolant (60) logée dans l'empilage de tôles (41, 141) par rapport à l'axe de rotation (D).

11. Moteur d'entraînement selon l'une quelconque des revendications précédentes, **caractérisé en ce que** le manchon isolant (60) est enfiché dans l'ouverture de passage d'arbre (42, 142) dans un état sous une température de fonctionnement du moteur d'entraînement et/ou avec une température sous 40 °C.

12. Moteur d'entraînement selon l'une quelconque des revendications précédentes, **caractérisé en ce que** le manchon isolant (60) est constitué en particulier d'une matière plastique renforcée par des fibres de verre, en particulier de polyamide, de préférence Pa6/66 Gf30, et/ou le manchon isolant (60) conserve une structure solide jusqu'à une température d'au moins 120°.

13. Moteur d'entraînement selon l'une quelconque des revendications précédentes, **caractérisé en ce que** le manchon isolant (60) et l'arbre de moteur (30, 130) sont en prise l'un avec l'autre à l'aide de contours à complémentarité de forme (36B, 136B), en particulier de manière parallèle et/ou de manière bloquée en rotation par rapport à un axe longitudinal (L) et/ou à l'axe d'enfichage (S), dans lequel il est prévu avantageusement que les contours à complémentarité de forme (36B, 136B) comprennent un contourage à complémentarité de forme (36, 136) sur la périphérie extérieure de l'arbre de moteur (30, 130) ou en sont formés.

14. Système comprenant un premier moteur d'entraînement (120) et un moteur d'entraînement selon l'une quelconque des revendications précédentes en tant que deuxième moteur d'entraînement (20), dans lequel les moteurs d'entraînement (20, 120) sont prévus pour un appareil d'aspiration (400) ou une machine-outil sous la forme d'une machine-outil manuelle (200, 300) ou d'une machine-outil semi-stationnaire ou sont partie intégrante de l'appareil d'aspiration (400) ou de la machine-outil, dans lequel les moteurs d'entraînement (20, 120) présentent respectivement un stator (80) avec un ensemble de bobines d'excitation (86) et un rotor (40, 140) avec un arbre de moteur (30, 130), qui est monté sur le stator ou par rapport au stator (80) de manière à pouvoir tourner autour d'un axe de rotation (D) à l'aide d'un ensemble de paliers (24A) et traverse une ouverture de passage d'arbre (42, 142) d'un empilage de tôles (41, 141), qui est maintenu sur une section de maintien (33) de l'arbre de moteur (30, 130) respectif, **caractérisé en ce que** les sections de maintien (33) des arbres de moteur (30, 130) des moteurs d'entraînement (20, 120) présentent dans la zone des empilages de tôles (41, 141) des géométries de périphérie extérieure identiques, dans lequel l'empilage de tôles (141) du premier moteur d'entraînement (120) prend appui directement sur la périphérie extérieure de la section de maintien (33) de l'arbre de moteur (30, 130) supportant l'empilage de tôles (141) et l'empilage de tôles (41) du deuxième moteur d'entraînement (20) prend appui sur la section de maintien (33) de l'arbre de moteur (30, 130) supportant l'empilage de tôles (41) par l'intermédiaire du manchon isolant (60) en tant qu'un corps isolant (60A) à isolation électrique.

15. Procédé de fabrication d'un moteur d'entraînement pour un appareil d'aspiration (400) ou une machine-outil sous la forme d'une machine-outil manuelle (200, 300) ou d'une machine-outil semi-stationnaire, dans lequel le moteur d'entraînement (20, 120) présente un stator (80) avec un ensemble de bobines d'excitation (86) et un rotor (40, 140) avec un arbre de moteur (30, 130), qui est monté sur le stator ou par rapport au stator (80) de manière à pouvoir tourner autour d'un axe de rotation (D) à l'aide d'un ensemble de paliers (24A) et traverse une ouverture de passage d'arbre (42, 142) d'un empilage de tôles (41, 141), qui est maintenu sur l'arbre de moteur (30, 130) et est isolé électriquement de l'arbre de moteur (30, 130), comprenant :
- l'enfichage d'un manchon isolant (60) dans l'ouverture de passage d'arbre (42, 142),
et
- l'enfichage de l'arbre de moteur (30, 130) dans un logement d'enfichage (64) du manchon isolant (60) à travers une ouverture d'enfichage (64A) du logement d'enfichage (64) de telle sorte que le manchon isolant (60) est disposé entre l'arbre de moteur (30, 130) et l'empilage de tôles (41, 141),
**caractérisé en ce qu'**au moins une partie faisant saillie de palier de butée (43A) fait saillie de l'empilage de tôles (41, 141) dans l'ouverture de passage d'arbre (42, 142), lequel pénètre dans le manchon isolant (60) et/ou vient en prise avec celui-ci.
